# NEUE EUROPÄISCHE PATENTSCHRIFT

(11) **EP 3 628 517 B2**
(45) Veröffentlichungstag und Bekanntmachung des Hinweises auf die Entscheidung über den Einspruch: **18.02.2026**
(45) Hinweis auf die Patenterteilung: 31.08.2022
(21) Anmeldenummer: 19198746.0
(22) Anmeldetag: 20.09.2019
(51) Int. Cl.: B60H 1/00, F25B 41/20, F25B 5/02, F25B 47/02

(54) **MODULARE KLIMATISIERUNGSVORRICHTUNG FÜR EIN KRAFTFAHRZEUG**
MODULAR AIR CONDITIONING DEVICE FOR A MOTOR VEHICLE
CLIMATISEUR MODULAIRE POUR UN VÉHICULE AUTOMOBILE

(30) Priorität: 25.09.2018 DE 102018123551
(43) Veröffentlichungstag der Anmeldung: 01.04.2020
(73) Patentinhaber: MAN Truck & Bus SE, 80995 München (DE)
(72) Erfinder: Peteranderl, Christian, 80636 München (DE); Bernath, Michael, 80637 München (DE); Yildirim, Kemal-Edip, 82194 Gröbenzell (DE); Köhler, Jürgen, 38173 Sickte (DE)
(74) Vertreter: v. Bezold & Partner Patentanwälte - PartG mbB

(56) Entgegenhaltungen:
- EP-A1- 1 319 536
- EP-A1- 2 660 086
- EP-A1- 2 719 966
- EP-A1- 3 335 919
- WO-A1-2009/141176
- WO-A1-2010/048575
- WO-A1-2010/141254
- WO-A1-2015/132113
- CN-A- 106 476 565
- CN-U- 201 890 111
- DE-A1- 10 161 254
- DE-A1- 102008 057 305
- DE-A1- 102014 006 965
- DE-A1- 102015 004 308
- DE-A1- 102016 119 231
- DE-A1- 102017 202 472
- DE-A1- 102017 204 116
- DE-T5- 112014 006 161
- GB-A- 2 558 914
- JP-A- 2012 117 734
- KR-A- 20140 033 665
- US-A- 5 927 398
- US-B1- 6 460 356
- ANONYMOUS: "ATHENIATM MkII HEAT PUMP SERIES", THERMO KING, 1 January 2015 (2015-01-01), XP093121528, Retrieved from the Internet <URL:https://www.swisclima.ch/files/thermoking/pdf/TK70034_Athenia_MK-II_Electric_Heat_Pump_(2015-10)_EN.pdf> [retrieved on 20240119]

## Beschreibung

Die Erfindung betrifft eine modulare Klimatisierungsvorrichtung für ein Kraftfahrzeug, vorzugsweise für ein elektrisch angetriebenes Kraftfahrzeug, sowie ein Kraftfahrzeug mit einer entsprechenden modularen Klimatisierungsvorrichtung.

Die zunehmende Elektrifizierung des Antriebsstrangs im Kraftfahrzeugbereich stellt auch die Klimatisierung des Fahrzeuginnenraums, insbesondere dessen Beheizung, vor neue Herausforderungen. Während im Fall von rein verbrennungsmotorisch angetriebenen Kraftfahrzeugen auch Abwärme des Verbrennungsmotors zur Beheizung des Fahrgastraums genutzt werden kann, fehlt diese Wärmequelle bei rein elektrisch angetriebenen Kraftfahrzeugen. Entsprechend muss dort auf zusätzliche Heizvorrichtungen zurückgegriffen werden.

In diesem Zusammenhang ist im Stand der Technik bekannt - zusätzlich zu Kältemaschinen zur Kühlung - Elektroheizungen, beispielsweise in Form von Stromdirektheizungen, zur Klimatisierung des Fahrzeuginnenraums zu verwenden. Wesentlich effizienter als eine direkte Elektroheizung ist jedoch eine elektrisch angetriebene Wärmepumpenheizung. Durch diese Technologie kann pro Einheit elektrischer Energie eine mehrfache Menge von Wärme erzeugt werden, indem zusätzlich Wärme aus der Umgebungsluft oder aus anderen Abwärmequellen genutzt wird. Ein System zur Fahrzeuginnenraumklimatisierung, das unter anderem auf diesem Prinzip beruht, ist beispielsweise aus der EP 2 660 0861 A1 bekannt.

Weiterhin offenbart die EP 1 319 536 A1 eine Klimatisierungseinrichtung für ein Fahrzeug mit einem Verdichter, einem Innenraum-Wärmeübertrager, einem Außenraum-Wärmeübertrager und einem Expansionsorgan. Die Klimatisierungseinrichtung ist dabei als autarkes flaches Modul ausgebildet und kann in einem Kältemodus zum Kühlen und in einem Wärmepumpenmodus zum Heizen betrieben werden.

Problematisch an derartigen Systemen ist jedoch oftmals, dass im Falle eines technischen Defekts im Kältemittelkreislauf für das gesamte Kraftfahrzeug keine ausreichende Heiz- bzw. Kühlleistung mehr zur Verfügung steht. Weiterhin problematisch ist, dass gerade im Nutzfahrzeugbereich - im Speziellen im Fall von Omnibussen - große Distanzen zwischen den einzelnen Hauptkomponenten der Klimaanlagen zu überwinden sind, was einerseits die Installation einer beachtlichen Länge an teuren Hochdruckkühlleitungen bedingt und anderseits die Anfälligkeit für Leckagen erhöht. Ferner ist in den bestehenden Systemen eine räumlich flexibel variierbares Regeln der Heiz- bzw. Kühlleistung oftmals nicht möglich.

Entsprechend ist es daher Aufgabe der Erfindung eine Klimatisierungsvorrichtung für ein Kraftfahrzeug sowie ein Kraftfahrzeug bereitzustellen, mit welchen Nachteile der bisherigen Lösungen vermieden werden können. Insbesondere ist Aufgabe der Erfindung eine effiziente Klimatisierungsvorrichtung mit hoher Ausfallsicherheit bereitzustellen, deren Heiz- und/oder Kühlleistung räumlich flexibel variiert werden kann.

Diese Aufgaben werden erfindungsgemäß durch eine modulare Klimatisierungsvorrichtung sowie ein Kraftfahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße modulare Klimatisierungsvorrichtung für ein Kraftfahrzeug umfasst dabei mindestens zwei Klimatisierungsmodule, die jeweils wiederum einen Kältemittelkreislauf umfassen. Jeder der Kältemittelkreisläufe umfasst einen Verdichter, einen ersten Wärmeübertrager zum Wärmeaustausch mit einem Fahrzeugaußenraum oder einer Komponente eines elektrischen Antriebs, eine erste Drosseleinrichtung und einen zweiten Wärmeübertrager zum Wärmeaustausch mit einem Fahrzeuginnenraum. Weiterhin weist jeder der Kältemittelkreisläufe eine Ventileinrichtung, umfassend eine Mehrzahl von Ventilen, zur Steuerung eines Kältemittelflusses innerhalb des Kältemittelkreislaufs auf, mittels derer der erste Wärmeübertrager in einem ersten Betriebsmodus M₁ zur Fahrzeuginnenraumkühlung stromauf und in einem zweiten Betriebsmodus M₂ zur Fahrzeuginnenraumheizung stromab vom zweiten Wärmeübertrager im Kältemittelkreislauf schaltbar ist. Die Begriffe *"stromauf"* und *"stromab"* sind dabei in Bezug auf den Verdichter als Quelle zu verstehen. Anders ausgedrückt fungiert der Kältemittelkreislauf eines Klimatisierungsmoduls im ersten Betriebsmodus als Kältemaschine zur Kühlung des Fahrzeuginnenraums und im zweiten Betriebsmodus als Wärmepumpe zur Erwärmung des Fahrzeuginnenraums. Des Weiteren umfasst jedes der Klimatisierungsmodule eine Modul-Steuereinrichtung zur Ansteuerung der Ventileinrichtung und/oder des Verdichters auf. Vorzugsweise ist das Kraftfahrzeug dabei ein elektrisch angetriebenes Kraftfahrzeug und/oder der Verdichter ein elektrisch angetriebener Verdichter.

Ferner umfasst die Klimatisierungsvorrichtung eine zentrale Steuereinrichtung, die ausgebildet ist, jedes der vorstehend erwähnten Klimatisierungsmodule unabhängig voneinander wahlweise im ersten Betriebsmodus M₁ oder im zweiten Betriebsmodus M₂ zu betreiben. Dies schließt allerdings nicht aus, dass die Klimatisierungsmodule wahlweise auch in weiteren Betriebsmodi betrieben werden können. So können die einzelnen Klimatisierungsmodule beispielweise auch ganz deaktiviert, d. h. funktionslos gestellt, werden.

Insgesamt wird somit auf vorteilhafte Weise eine modulare Klimatisierungsvorrichtung für ein Kraftfahrzeug bereitgestellt, bei der die einzelnen Klimatisierungsmodule gleichzeitig unterschiedliche Funktionen ausführen können, bzw. die Anzahl der betriebenen Klimatisierungsmodule variabel eingestellt werden kann. Ferner kann auch die von einem einzelnen Klimatisierungsmodul abgegebene bzw. aufgenommene Wärmemenge und damit auch deren Temperaturniveau unabhängig von den anderen Modulen festgelegt werden, wobei dies von der zentralen Steuereinrichtung koordiniert wird. Beispielsweise kann eine Batterie des Kraftfahrzeugs mit einem Modul mit 25 °C gekühlt, eine Leistungselektronik des Kraftfahrzeugs mit einem Modul mit 40 °C gekühlt, und eine elektrische Maschine des Kraftfahrzeugs mit einem Modul mit 50°C gekühlt werden. In diesem Zusammenhang kann somit auch von einem Master-Slave-System gesprochen werden, wobei die zentrale Steuereinrichtung als Master-Einheit und die Klimatisierungsmodule als Slave-Einheiten bezeichnet werden können, die Steuerbefehle von der zentrale Steuereinrichtung erhalten. Hierbei ist es für den Fachmann zudem offensichtlich, dass die eben beschriebene Klimatisierungsvorrichtung eine beliebige Anzahl an Klimatisierungsmodulen umfassen kann und nicht auf zwei Klimatisierungsmodule beschränkt ist. Auf vorteilhafte Weise wird damit eine modulare und damit skalierbare bzw. je nach Einsatzbereich und/oder Kraftfahrzeug flexibel anpassbare Klimatisierungsvorrichtung bereitgestellt, bei der auch im Fall eines Defekts einzelner Module auch weiterhin eine ausreichende Klimatisierung des Kraftfahrzeugs sichergestellt werden kann.

Nach einem ersten Aspekt der Erfindung kann der, vorzugsweise elektrisch angetriebene, Verdichter mindestens eines Klimatisierungsmoduls ein Hochspannungskompressor sein, der vorzugsweise mit einer Spannung zwischen 250-800 V betrieben wird. Mit anderen Worten kann der Verdichter, welcher auch als Kompressor bezeichnet werden kann und zur Verdichtung des Kältemittels dient, ausgebildet sein, zum ordnungsgemäßen Betrieb mindestens eine Spannung von 250 V zu benötigen. Dabei kann der Verdichter bzw. der Hochspannungskompressor beispielweise in Form eines Rollkolbens, eines Scrollverdichters, eines Hubkolbenverdichters, eines Schraubenverdichters und/oder eines Turboverdichters ausgebildet sein. Auf vorteilhafte Weise wird dadurch sichergestellt, dass das Klimatisierungsmodul auch im Fall großvolumiger Fahrzeuginnenräume (z. B. Omnibus) eine ausreichende Kühl- bzw. Heizleistung erbringen kann.

Um eine Klimatisierungsvorrichtung mit einer hohen Betriebssicherheit für mögliche Fahrzeuginsassen bereitzustellen, kann gemäß einem weiteren Aspekt der Erfindung der zweite Wärmeübertrager mindestens eines Klimatisierungsmoduls ein Kühlmittel/Kältemittel-Wärmeübertrager, vorzugsweise in Form eines Plattenwärmeübertragers, sein. Als Wärmeübertrager wird hierbei - wie auch im gesamten Dokument - ein Apparat verstanden, der Wärme von einem Medium auf ein anderes und umgekehrt übertragen kann. Im vorliegenden Fall handelt es sich bei dem ersten Medium um ein Kühlmittel, beispielsweise Wasser, und bei dem zweiten Medium um ein Kältemittel, beispielsweise CO₂. Als Kühl- bzw. Kältemittel werden dabei gasförmige, flüssige oder feste Stoffe oder Stoffgemische verstanden, die zum Abtransport von Wärme eingesetzt werden können. Der Unterschied zwischen Kühl- und Kältemittel ist, dass Kältemittel in einem Kältezyklus auch Wärme entgegen einem Temperaturgradienten übertragen können, während Kühlmittel lediglich in der Lage sind, in einem Kühlzyklus die Entropie entlang des Temperaturgradienten zu einer Stelle niedrigerer Temperatur zu transportieren.

Weiterhin kann der zweite Wärmeübertrager gemäß einer nicht erfindungsgemäßen Variante in Verbindung mit einem Kühlmittelkreislauf stehen, der im Folgenden zur besseren Unterscheidung als erster Kühlmittelkreislauf bezeichnet werden soll. Dieser erste Kühlmittelkreislauf kann ferner eine, als erste Pumpe bezeichnete, Pumpe zur Förderung von Kühlmittel sowie einen dritten Wärmeübertrager, vorzugsweise einen Luft/Kühlmittel-Wärmeübertrager, zum Wärmeaustausch mit dem Fahrzeuginnenraum umfassen. Zur Regulierung des Luftstroms in den Fahrzeuginnenraum kann ferner auch ein Ventilator am dritten Wärmeübertrager angeordnet sein. Hierbei ist anzumerken, dass die gesamten im Dokument verwendeten Ordnungszahlwörter (erster, zweiter, dritter etc.) lediglich zur besseren Unterscheidung der einzelnen Komponenten dienen und nicht derart zu verstehen sind, dass tatsächlich auch eine entsprechende Anzahl der Komponenten in der Vorrichtung vorhanden ist. Auf vorteilhafte Weise kann gemäß diesem Aspekt der Erfindung das Heizen bzw. Kühlen des Fahrzeuginnenraums nicht durch unmittelbaren Wärmeaustausch zwischen dem Kältemittelkreislauf und dem Fahrzeuginnenraum, sondern über einen mittelbaren Wärmeaustausch über den ersten Kühlmittelkreislauf erfolgen. Dadurch kann die Betriebssicherheit erhöht werden, da ein Eintrag von oftmals gefährlichem Kältemittel (z. B. CO₂) den Fahrgastraum - beispielweise im Fall einer Leckage - minimiert werden kann, da der Kältemittelkreislauf nicht in direktem Kontakt mit einem Fahrzeuginnenraum, insbesondere nicht mit einen Fahrerarbeitsplatz, steht.

Nach einem weiteren Aspekt der Erfindung kann der Kältemittelkreislauf mindestens eines Klimatisierungsmoduls einen vierten Wärmeübertrager, der vorzugsweise als Kühlmittel/Kältemittel-Wärmeübertrager ausgebildet ist, umfassen. Dieser kann im ersten Betriebsmodus M₁ parallel zum zweiten Wärmeübertrager und im zweiten Betriebsmodus M₂ parallel zum ersten Wärmeübertrager im Kältemittelkreislauf geschaltet sein. Dabei kann der vierte Wärmeübertrager in Verbindung mit einem zweiten Kühlmittelkreislauf stehen, der vorzugsweise zur Kühlung eines elektrischen Energiespeichers und/oder einer elektrischen Maschine ausgebildet ist. Zudem oder alternativ kann der zweite Kühlmittelkreislauf auch zur Kühlung einer Frontbox, einer Leistungselektronik und/oder eines elektrischen Umformers ausgebildet sein. Zu diesem Zweck kann der zweiten Kühlmittelkreislauf ferner eine, als zweite Pumpe bezeichnete, Pumpe zur Zirkulation des Kühlmittels, beispielsweise Wasser, umfassen und/oder thermisch mit einer elektrischen Maschine und/oder einem elektrischen Energiespeicher, vorzugsweise über eine Kühlplatte, gekoppelt sein. Zudem oder alternativ kann das Kühlmittel des zweiten Kühlmittelkreislaufs dabei auch zumindest einen Teil einer elektrischen Maschine und/oder eines elektrischen Energiespeichers um- und/oder durchströmen. Auf vorteilhafte Weise wird dadurch einerseits eine Kühlung eines elektrischen Energiespeichers, einer elektrischen Maschine, einer Leistungselektronik und/oder eines elektrischen Umformers eines Kraftfahrzeugs erreicht, während gleichzeitig die Abwärme dieser Komponenten zur Fahrzeuginnenraumheizung verwendet werden kann.

Gemäß einem weiteren Aspekt der Erfindung kann der Kältemittelkreislauf mindestens eines Klimatisierungsmoduls einen fünften Wärmeübertrager umfassen, der sowohl im ersten Betriebsmodus M₁ als auch zweiten Betriebsmodus M₂ in Serie zum ersten und zweiten Wärmeübertrager im Kältemittelkreislauf geschaltet ist. Mit anderen Worten durchströmt das Kältemittel des Kältemittelkreislaufs sowohl im ersten als auch zweiten Betriebsmodus M₁ und M₂ nacheinander jeweils den ersten, zweiten und fünften Wärmeübertrager, wobei die Reihenfolge der Durchströmung je nach Betriebsmodus variieren kann. Mittels des fünften Wärmeübertragers kann der Einsatzbereich des entsprechenden Klimatisierungsmoduls erweitert werden, da weitere vorteilhafte Funktionen des Kältemittelkreislaufs realisiert werden können, auf die im Folgenden detaillierter eingegangen wird.

Beispielsweise kann nach einem weiteren Aspekt der Erfindung der fünfte Wärmeübertrager ein Luft/Kältemittel-Wärmeübertrager, vorzugsweise in Form eines Rippenrohrs und/oder eines Microchannel-Wärmeübertragers, sein, der thermisch an eine Luftleitung zum Wärmeaustausch mit dem Fahrzeuginnenraum gekoppelt sein kann. Zudem oder alternativ kann der fünfte Wärmeübertrager thermisch auch an einen in den Fahrgastraum strömenden Luftstrom gekoppelt sein. Im Speziellen kann der fünfte Wärmeübertrager thermisch an einen Luftstrom gekoppelt sein, die zuvor bereits im thermischen Kontakt mit dem zweiten Wärmeübertrager stand. D. h., ein Luftstrom kann zunächst Wärme mit dem zweiten Wärmeübertrager und anschließend Wärme mit dem fünften Wärmeübertrager austauschen, bevor er in den Fahrgastraum strömt. Auf vorteilhafte Weise ermöglicht dieser Aspekt der Erfindung eine Entfeuchtung der in den Fahrzeuginnenraum strömenden Luft.

Alternativ kann der fünfte Wärmeübertrager auch ein Kühlmittel/Kältemittel-Wärmeübertrager, vorzugsweise in Form eines Plattenwärmeübertragers, sein, der in Verbindung mit einem, als dritter Kühlmittelkreislauf bezeichneten, Kühlmittelkreislauf stehen kann. Hierbei kann als Kühlmittel im dritten Kühlmittelkreislauf - wie auf für alle anderen Kühlmittelkreisläufe im gesamten Dokument - ein wasserbasiertes Kühlmittel verwendet werden.

Gemäß einer Weiterbildung dieses Aspekts kann der dritte Kühlmittelkreislauf hierbei zusätzlich eine dritte Pumpe, einen sechsten Wärmeübertrager, vorzugsweise einen Luft/Kältemittel-Wärmeübertrager, und/oder einen siebten Wärmeübertrager, vorzugsweise einen Kühlmittel/Kältemittel-Wärmeübertrager, zum Wärmeaustausch mit dem Fahrzeuginnenraum umfassen. Weiterhin kann der dritte Kühlmittelkreislauf ein oder mehrere Ventile umfassen, durch die verschiedene Strömungspfade im dritten Kühlmittelkreislauf realisiert werden können. Ferner kann im Bereich des sechsten Wärmeübertragers ein Ventilator zur Regulierung des Luftstroms angeordnet sein. Während der siebte Wärmeübertrager zur Entfeuchtung des zum Fahrgastraum strömenden Luftstroms dienen kann, ermöglicht der sechste Wärmeübertrager auf vorteilhafte Weise eine weitere, d. h. räumlich vom siebten Wärmeübertrager getrennte, Wärmeeinbringung in den Fahrgastraum. Durch das räumlich versetzte Einströmen in den Fahrgastraum kann auf vorteilhafte Weise einer vertikalen Luftschichtung entgegengewirkt werden.

Nach einem weiteren Aspekt der Erfindung kann der Kältemittelkreislauf mindestens eines Klimatisierungsmoduls thermisch direkt an einen elektrischen Energiespeicher, vorzugsweise eine Traktionsbatterie, gekoppelt sein. Zudem oder alternativ kann der Kältemittelkreislauf mindestens eines Klimatisierungsmoduls thermisch auch direkt an eine elektrische Maschine gekoppelt sein. Eine direkte Kopplung bedeutet dabei, dass der Kältemittelkreislauf auch unmittelbar, d. h. ohne zwischengeschalteten Kühlmittelkreislauf, Wärme an eine elektrischen Maschine und/oder einen elektrischen Energiespeicher abgeben bzw. Wärme von diesen Komponenten aufnehmen kann. Vorzugsweise um- und/oder durchströmt hierzu das Kältemittel des Kältemittelkreislaufs auch zumindest einen Teil einer elektrischen Maschine und/oder eines elektrischen Energiespeichers. Auf vorteilhaft Weise kann dadurch eine kostengünstige Kühlung eines elektrischen Energiespeichers bzw. einer elektrischen Maschine erreicht werden, da die Komponenten für einen Kühlmittelkreislauf (Pumpen, Wärmetauscher etc.) eingespart werden können. Ferner kann auf vorteilhafte Weise eine Kühlung der Zellen einer Batterie bei gleicher Temperatur realisiert werden, da das Kältemittel bei seinem Phasenübergang vom flüssigen in den gasförmigen Zustand zwar Wärme aufnimmt, jedoch seine Temperatur nicht ändert.

Gemäß einem weiteren Aspekt der Erfindung kann mindestens eines der Klimatisierungsmodule mindestens eine Luftklappe und/oder mindestens einen Ventilator umfassen. Der Ventilator, der in diesem Zusammenhang auch als Gebläse, Lüfter und/oder Strömungsmaschine bezeichnet werden kann, kann dabei - beispielweise mittels eines rotierenden Laufrads - Luft fördern von und/oder zum jeweiligen Klimatisierungsmodul fördern. Hierbei kann die Steuereinrichtung ferner ausgebildet sein, die von dem jeweiligen Klimatisierungsmodul geförderte Luftmenge, beispielweise durch Erhöhung/Reduzierung einer Drehzahl des Ventilators, zusteuern. Vorzugsweise erfolgt dies dabei unabhängig von der Betriebsweise der weiteren Klimatisierungsmodule. Auf vorteilhafte Weise wird dadurch nicht nur eine flexibler einstellbare Klimatisierung eines Fahrgastraums erreicht.

Nach einem weiteren Aspekt der Erfindung kann der Kältemittelkreislauf mindestens eines Klimatisierungsmoduls CO₂ und/oder Propan als Kältemittel verwenden. Ohne den Bereich der Erfindung zu verlassen können jedoch auch andere - dem Fachmann bekannte - Kältemittel, darunter R134a, R1234yf und/oder deren Mischung R513a, verwendet werden. Der Vorteil der Verwendung von CO₂ liegt hierbei darin, dass CO₂ weder giftig, explosiv noch brennbar ist sowie alle aktuellen Umweltanforderungen erfüllt. Zudem oder alternativ kann der Kältemittelkreislauf mindestens eines Klimatisierungsmoduls auch einen Sammler zum Sammeln von Kältemittel, vorzugsweise als Pufferspeicher für Kältemittel, umfassen. Ferner kann der Sammler auch zur Trennung von gasförmigen und flüssigen Kältemittel bzw. zum Abscheiden von Öl am Boden des Sammlers ausgebildet sein. In diesem Zusammenhang kann der Sammler somit auch als Abscheider bezeichnet werden. Auf vorteilhafte Weise kann so sichergestellt werden, dass möglichst nur gasförmiges Kältemittel in den Verdichter gelangt, da Flüssigkeiten hier Schäden verursachen könnten. Zudem oder alternativ kann der Kältemittelkreislauf mindestens eines Klimatisierungsmoduls auch einen Zusatzkühler umfassen, der einen Bereich des Kältemittelkreislaufs zwischen der Drosseleinrichtung und ersten Wärmeübertrager mit einem Bereich des Kältemittelkreislaufs vor dem Eingang des Verdichters thermisch koppelt. Der Zusatzkühler kann somit auch als innerer Wärmeübertrager bezeichnet werden, weil er Wärme innerhalb des Kältemittelkreislaufs überträgt. Bevorzugt wird der Zusatzkühler dabei mittels eines Wärmeübertragers realisiert, jedoch können auch andere Formen der Wärmekopplung verwendet werden ohne den Bereich der Erfindung zu verlassen. Auf vorteilhafte Weise ermöglicht der Zusatzkühler die Wirksamkeit des Kreisprozesses zu erhöhen.

Weiterhin wird erfindungsgemäß ein Kraftfahrzeug, vorzugsweise Nutzfahrzeug, mit einer modularen Klimatisierungsvorrichtung wie in diesem Dokument beschrieben bereitgestellt. Hierdurch kann auf vorteilhafte Weise ein Kraftfahrzeug mit einer modularen und damit skalierbare, d. h. je nach Einsatzbereich, Fahrzeugtyp, und/oder Fahrgastzahl flexibel anpassbare, Klimatisierungsvorrichtung bereitgestellt, bei dem auch im Fall eines Defekts einzelner Module weiterhin eine ausreichende Klimatisierung des Kraftfahrzeugs sichergestellt werden kann.

Nach einem ersten Aspekt kann das Kraftfahrzeug dabei ein Elektrofahrzeug, vorzugsweise ein elektrischer Omnibus, sein. Mit anderen Worten kann der Antrieb des Kraftfahrzeugs ausschließlich mittels einer elektrischen Maschine (Elektromotor) erfolgen. Da bei derartigen Fahrzeugen keine Abwärme eines Verbrennungsmotors zur Beheizung des Fahrgastraums zur Verfügung steht, wird durch die vorliegende Erfindung gerade für Elektrofahrzeuge auf vorteilhafte Weise eine zuverlässige Klimatisierung des Innenraums ermöglicht. Alternativ kann es sich bei dem Kraftfahrzeug allerdings auch um ein verbrennungsmotorisch-betriebenes Kraftfahrzeug oder Hybrid-Kraftfahrzeug handeln. Weiterhin kann zudem oder alternativ mindestens eines der Klimatisierungsmodule im Bereich des Daches des Kraftfahrzeugs angeordnet sein. Besonders bevorzugt sind dabei alle der Klimatisierungsmodule im Bereich des Daches und/oder auf dem Dach des Kraftfahrzeugs angeordnet. Auf vorteilhafte Weise wird dadurch eine platzsparende und einfach zu wartende Montage der modularen Klimatisierungsvorrichtung ermöglicht.

Gemäß einem weiteren Aspekt der Erfindung kann zur zonalen Klimatisierung des Fahrzeuginnenraums jedes der Klimatisierungsmodule einem Bereich des Fahrzeuginnenraums zugeordnet sein. Mit anderen Worten können verschiedene Innenraumbereiche des Kraftfahrzeug, die auch als Klimazonen bezeichnet werden können, mittels einem jeweiligen Klimatisierungsmodul unterschiedlich stark gekühlt bzw. beheizt werden. So können gezielt die Bereiche bzw. Zonen eines Innenraums, in denen sich Menschen aufhalten, klimatisiert werden während momentan nicht genutzte Bereiche, nicht klimatisiert werden. Beispielweise kann so im Falle eines Omnibusses auf Betriebsfahrt, d. h. in einer Situation in der sich lediglich der Busfahrer im Fahrzeuginnenraum aufhält, nur ein Bereich um den Fahrer klimatisiert werden, während im Heckbereich des Kraftfahrzeugs liegende Bereiche nicht aktiv klimatisiert werden. Auch kann gemäß diesem Aspekt - bei entsprechender Anordnung der Klimatisierungsmodule - eine an das individuelle Komfortempfinden angepasste Klimatisierung (Fahrer, Beifahrer etc.) des Innenraums erreicht werden. Auf vorteilhafte Weise wird dadurch ein Kraftfahrzeug mit einer je nach Fahrgastaufkommen bzw. Komfortempfinden flexibel anpassbare Klimatisierungsvorrichtung bereitgestellt.

Nach einer Weiterbildung dieses Aspekts kann die zentrale Steuereinrichtung ausgebildet sein, entsprechend einer Maßgabe einen Teil der Klimatisierungsmodule zu aktivieren und/oder einen Teil der Klimatisierungsmodule zu deaktivieren. Die Maßgabe, welche auch als Vorgabe bezeichnet werden kann, kann hierbei vom Benutzer vorgegeben werden, beispielsweise in dem bestimmte zu aktivierende bzw. deaktivierende Klimatisierungsmodule über eine Eingabevorrichtung ausgewählt werden. Ferner kann die Maßgabe auch ein Einsatzbereich, eine Fahrgastzahl und/oder eine räumlich Verteilung von Fahrgästen im Fahrzeuginnenraum sein. Zudem oder alternativ kann die zentrale Steuereinrichtung auch ausgebildet sein, entsprechend einer Maßgabe einen Teil der Klimatisierungsmodule im ersten Betriebsmodus M₁ und/oder einen Teil der Klimatisierungsmodule im zweiten Betriebsmodus M₂ zu betreiben. Auf vorteilhafte Weise kann dadurch eine optimale Nutzung der vorhandenen Module je nach Anforderung ermöglicht.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine modulare Klimatisierungsvorrichtung für ein Kraftfahrzeug gemäß einer Ausführungsform der Erfindung;
- Figur 2:: einen schematischen Schaltplan eines Kältemittelkreislaufs eines Klimatisierungsmoduls nach einer ersten Ausführungsform der Erfindung;
- Figur 3:: einen schematischen Schaltplan eines Kältemittelkreislaufs eines Klimatisierungsmoduls nach einer zweiten Ausführungsform der Erfindung;
- Figur 4:: einen schematischen Schaltplan eines Kältemittelkreislaufs eines Klimatisierungsmoduls nach einer dritten Ausführungsform der Erfindung;
- Figur 5:: einen schematischen Schaltplan eines Kältemittelkreislaufs eines Klimatisierungsmoduls nach einer vierten Ausführungsform der Erfindung;
- Figur 6:: Kältemittelpfade im ersten und zweiten Betriebsmodus für die in Figur 5 gezeigte vierte Ausführungsform der Erfindung;
- Figur 7:: einen schematischen Schaltplan eines Kältemittelkreislaufs eines Klimatisierungsmoduls nach einer fünften Ausführungsform der Erfindung;
- Figur 8:: Kältemittelpfade im ersten und zweiten Betriebsmodus für die in Figur 7 gezeigte fünfte Ausführungsform der Erfindung;
- Figur 9:: einen schematischen Schaltplan eines Kältemittelkreislaufs eines Klimatisierungsmoduls nach einer sechsten Ausführungsform der Erfindung;
- Figur 10:: Kältemittelpfade im ersten und zweiten Betriebsmodus für die in Figur 9 gezeigte sechste Ausführungsform der Erfindung;
- Figur 11:: eine Legende zu den in Figuren 1-10 gezeigten Kältemittelkreisläufen; und
- Figur 12:: eine schematische Darstellung eines Kraftfahrzeugs mit einer modulare gemäß einer Ausführungsform der Erfindung.

Gleiche oder funktional äquivalente Elemente sind dabei in allen Figuren mit denselben Bezugszeichen beschrieben und zum Teil nicht gesondert beschrieben.

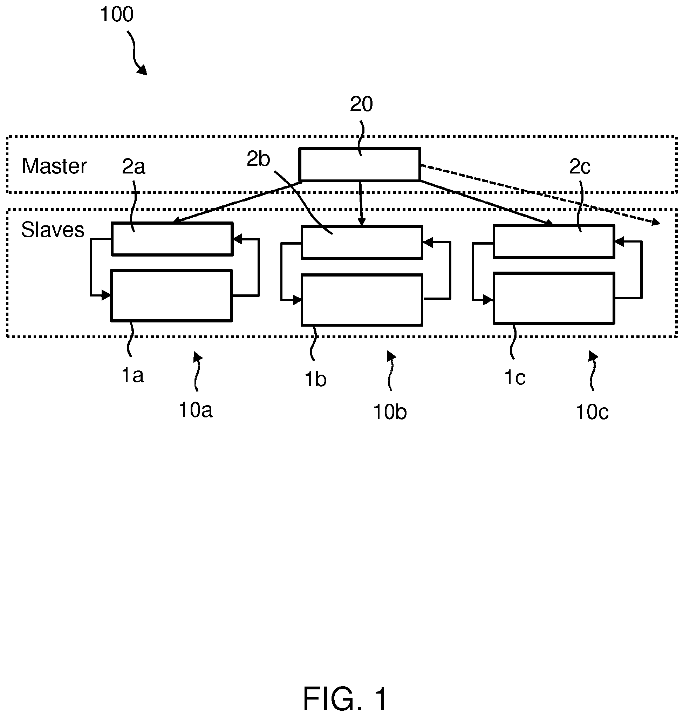

Figur 1 zeigt eine modulare Klimatisierungsvorrichtung 100 für ein Kraftfahrzeug 30 gemäß einer Ausführungsform der Erfindung. Die Klimatisierungsvorrichtung 100 umfasst dabei mindestens zwei - in der vorliegenden Ausführungsform drei - Klimatisierungsmodule 10a, 10b, 10c, die jeweils einen Kältemittelkreislauf 1a, 1b, 1c und eine Modulsteuereinrichtung 2a, 2b, 2c umfassen. Jede der Modul-Steuereinrichtungen 2a, 2b, 2c kann durch Ansteuerung der im Folgenden noch eingehender beschriebenen Komponenten ihres zugeordneten Kältemittelkreislaufs 1a, 1b, 1c die von den einzelnen Klimatisierungsmodulen 10a, 10b, 10c aufgenommene und/oder abgegebene Wärmemenge regeln. Weiterhin steht jede der Modulsteuereinrichtungen 2a, 2b, 2c jeweils mit einer übergeordneten zentralen Steuereinrichtung 20 Verbindung. Diese kann vorliegend sowohl Steuerbefehle an die einzelnen Modul-Steuereinrichtungen 2a, 2b, 2c senden, als von diesen Informationen betreffend das jeweilige Klimatisierungsmodul 10a, 10b, 10c empfangen. Zur Kommunikation zwischen zentrale Steuereinrichtung 20 und den einzelnen Modulsteuereinrichtungen 2a, 2b, 2c kann die Klimatisierungsvorrichtung 100 ferner auch geeignete Datenleitungen, beispielsweise in Form von CAN- und/oder LIN-Busleitungen, umfassen. Weiterhin kann jedes der Klimatisierungsmodule 10a, 10b, 10c unabhängig voneinander wahlweise in einem ersten Betriebsmodus M₁ zur Fahrzeuginnenraumkühlung oder in einem zweiten Betriebsmodus M₂ zur Fahrzeuginnenraumheizung betrieben werden. Dies schließt dabei nicht aus, dass die Klimatisierungsmodule 10a, 10b, 10c wahlweise auch in weiteren Betriebsmodi betrieben werden können. So können die einzelnen Klimatisierungsmodule 10a, 10b, 10c auch ganz deaktiviert, d. h. funktionslos gestellt, werden und/oder zur Heizung und/oder Kühlung einer Komponente eines elektrischen Antriebs verwendet werden.

Erfindungsgemäß wird somit eine modulare Klimatisierungsvorrichtung 100 bereitgestellt, bei der die einzelnen Klimatisierungsmodule 10a, 10b, 10c gleichzeitig unterschiedliche Funktionen ausführen können, bzw. die Anzahl der betriebenen Klimatisierungsmodule 10a, 10b, 10c variabel eingestellt werden kann. Weiterhin kann auch die von einem einzelnen Klimatisierungsmodul 10a, 10b, 10c abgegebene bzw. aufgenommene Wärmemenge unabhängig von den anderen Modulen festgelegt werden, wobei dies von der zentralen Steuereinrichtung 20 koordiniert wird. In diesem Zusammenhang kann somit auch von einem Master-Slave-System gesprochen werden, wobei die zentrale Steuereinrichtung 20 als Master-Einheit und die Klimatisierungsmodule 10a, 10b, 10c als Slave-Einheiten bezeichnet werden können, die Steuerbefehle von der zentrale Steuereinrichtung 20 erhalten. In diesem Zusammenhang ist es für den Fachmann auch offensichtlich, dass die eben beschriebene Klimatisierungsvorrichtung 100 nicht auf drei Klimatisierungsmodule 10a, 10b, 10c beschränkt ist, sondern auch beliebig viele weitere Module umfassen kann, ohne den Bereich der Erfindung zu verlassen. Auf vorteilhafte Weise wird vorliegend eine modulare und damit skalierbare bzw. je nach Einsatzbereich und/oder Kraftfahrzeug flexibel anpassbare Klimatisierungsvorrichtung 100 bereitgestellt.

Nachdem bislang der modulare Aufbau der Klimatisierungsvorrichtung 100 beschrieben wurde, wird nun im Folgenden detailliert auf den Aufbau der Kältemittelkreisläufe 1a, 1b, 1c der einzelnen Klimatisierungsmodule 10a, 10b, 10c eingegangen. Hierbei sei jedoch erwähnt, dass folgenden Ausführungsformen lediglich exemplarisch mögliche Ausgestaltungen einzelner Kältemittelkreisläufe 1a, 1b, 1c zeigen. Die gesamte Klimatisierungsvorrichtung 100 kann je nach Kraftfahrzeug oder Verwendungszweck mehrere identische Klimatisierungsmodule 10a, 10b, 10c, aber auch eine Kombination von Klimatisierungsmodulen 10a, 10b, 10c mit verschiedenen - nun eingehender beschriebenen - Kältemittelkreisläufen 1a, 1b, 1c umfassen.

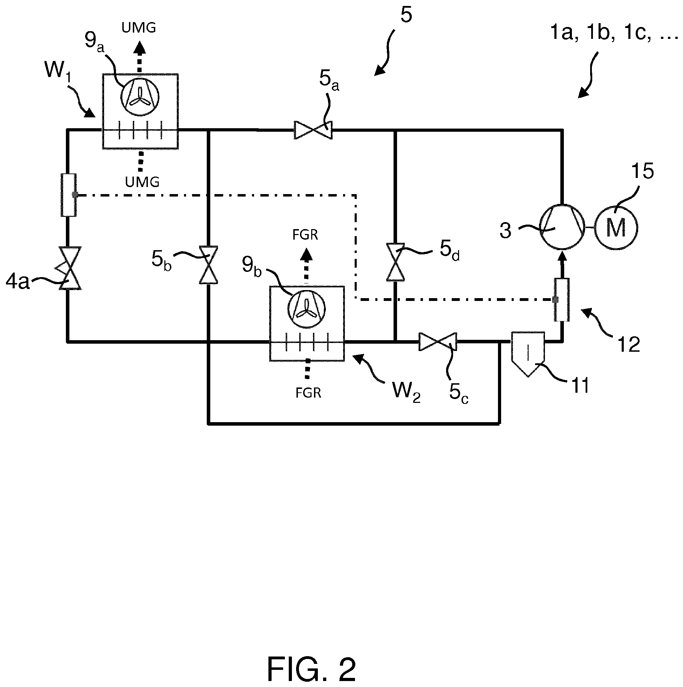

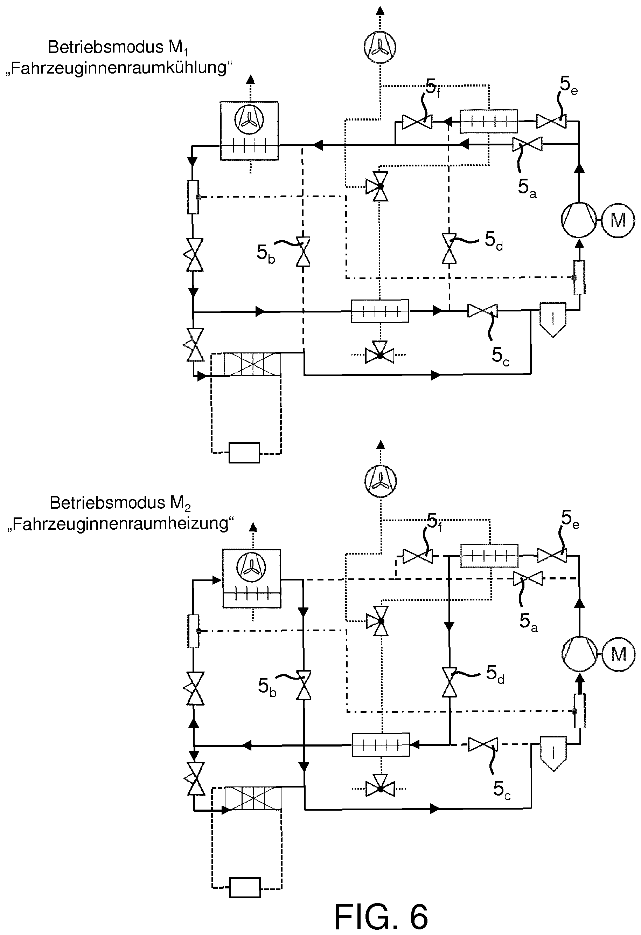

Figur 2 zeigt einen Kältemittelkreislauf 1a, 1b, 1c eines Klimatisierungsmoduls 10a, 10b, 10c gemäß einer ersten Ausführungsform der Erfindung. Vorliegend ist dabei der gesamte Kältemittelkreislauf 1a, 1b, 1c gezeigt, wobei in Abhängigkeit des Betriebsmodus des Klimatisierungsmoduls 10a, 10b, 10c teilweise nur bestimmte Bereiche des dargestellten Kältemittelkreislaufs 1a, 1b, 1c tatsächlich vom Kältemittel durchströmt werden. Der Aspekt der je nach Betriebsmodus unterschiedlichen Strömungsführung wird später bei der Beschreibung von Figur 6 eingehender diskutiert. Um bei dem in Figur 2 dargestellten Kältemittelkreislauf 1a, 1b, 1c einen Kältemittelfluss zu starten oder in Gang zu halten umfasst der Kältemittelkreislauf 1a, 1b, 1c einen, vorzugsweise über einen Elektromotor 15 angetrieben, Verdichter 3. Der Verdichter 3, welcher auch als Kompressor bezeichnet werden kann, kann hierbei beispielweise in Form eines Rollkolbens, eines Scrollverdichters, eines Hubkolbenverdichters, eines Schraubenverdichters und/oder eines Turboverdichters ausgebildet sein. Mittels dieses Bauteils wird das Kältemittel, vorzugsweise CO₂, komprimiert. Weiterhin umfasst der Kältemittelkreislauf 1a, 1b, 1c einen ersten Wärmeübertrager W₁ zum Wärmeaustausch mit einem Fahrzeugaußenraum und/oder einer Komponente eines elektrischen Antriebs, eine erste Drosseleinrichtung 4a, beispielweise in Form eines Expansionsventils und/oder eines Kapillarrohrs, sowie einen zweiten Wärmeübertrage W₂ zum Wärmeaustausch mit einem Fahrzeuginnenraum und/oder einer Komponente eines elektrischen Antriebs. In der vorliegenden Ausführungsform sind die beiden Wärmeübertrager W₁, W₂ als Luft/Kältemittel-Wärmeübertrager, z. B. als Rippenrohrwärmeübertrager, Flachrohrwärmeübertrager und/oder Microchannel-Wärmeübertrager, ausgebildet. Als Rippenrohrwärmeübertrager soll hierbei allgemein ein Apparat verstanden werden, der mindestens ein rohrförmiges Bauteil umfasst, das zur Verbesserung der übertragbaren Wärme- oder Kälteleistung Rippen aus gut wärmeleitendem Material besitzt. Vorzugsweise dienen die Rippen zur Vergrößerung der Rohroberfläche und können auf der Außenseite zum Beispiel durch Walzen, durch Auflöten bzw. Schweißen, durch Aufpressen oder Einnuten in die Rohrwand hergestellt werden. Anstelle eines Rippenrohrwärmeübertrages können allerdings auch andere Bauformen von Wärmeübertragern, im Speziellen Luft/Kältemittel-Wärmeübertragern, verwendet werden, ohne den Bereich der Erfindung zu verlassen.

Zusammen mit der Ventileinrichtung 5, umfassend die Ventilen 5ₐ-5_{d}, und den entsprechenden Kältemittelleitungen bilden die bisherigen Komponenten einen geschlossenen - im Folgenden auch als Hauptkältemittelkreislauf bezeichneten - Kältemittelkreislauf 1a, 1b, 1c, der wahlweise als Kältemaschine, vorzugsweise zur Fahrzeuginnenraumkühlung, oder auch als Wärmepumpe, vorzugsweise zur Fahrzeuginnenraumheizung, betrieben werden kann. Zur Unterscheidung dieser Betriebsmodi werden im Folgenden die Begriffe erster Betriebsmodus M₁ und zweiter Betriebsmodus M₂ verwendet. Der erste Betriebsmodus M₁ soll dabei vorzugsweise zur Fahrzeuginnenraumkühlung und/oder Kühlung einer Komponente eines elektrischen Antriebs dienen, während der zweite Betriebsmodus M₂ vorzugsweise zur Fahrzeuginnenraumheizung und/oder zu Beheizung einer Komponente eines elektrischen Antriebs dienen soll. Die beiden Betriebsmodi M₁ und M₂ werden hierbei durch ein entsprechendes Verschalten der Ventile 5ₐ-5_{d} erreicht, so dass im ersten Betriebsmodus M₁ der erste Wärmeübertrager W₁ stromauf und im zweiten Betriebsmodus M₂ der erste Wärmeübertrager W₁ stromab vom zweiten Wärmeübertrager W₂ geschaltet ist. Bzw. anders ausgerückt kann im ersten Betriebsmodus M₁ der erste Wärmeübertrager als Kondensator bzw. Gaskühler und der zweite Wärmeübertrager W₂ als Verdampfer fungieren, während im zweiten Betriebsmodus der erste Wärmeübertrager als Verdampfer und der zweite Wärmeübertrager W₂ als Kondensator bzw. Gaskühler fungiert. Details zu den unterschiedlichen Ventilstellungen - welche vom Prinzip für alle noch folgenden Ausführungsformen dieselbe ist - werden im Zuge der Figurenbeschreibung von Figur 6 eingehender diskutiert werden. Vorliegend steht zunächst der rein konstruktive Aufbau der verschiedenen Ausführungsformen im Vordergrund.

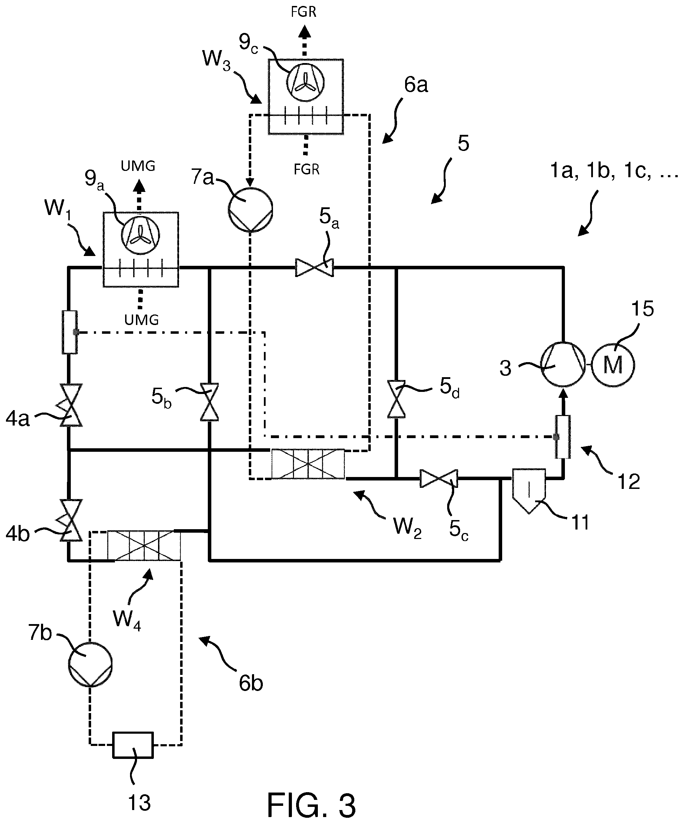

Weiterhin sollen sowohl in der in Figur 2 dargestellten, wie auch in den Figuren 3-10 dargestellten Ausführungsformen die Ventile 5ₐ-5ₕ , die Ventilatoren 9ₐ-9_{d}, und/oder der Verdichter 3 in Verbindung mit einer nicht näher dargestellten Modul-Steuereinrichtungen 2a, 2b, 2c stehen, wobei letztere - wie in Figur 1 gezeigt - in Verbindung mit einer übergeordneten zentralen Steuereinrichtung 20 stehen. Dadurch können beispielweise Steuerbefehle an die Ventile 5a-5ₕ übermittelt werden, wodurch die z. B. zwischen einer Offenstellung in eine Geschlossenstellung wechseln können oder umgekehrt. Zudem oder alternativ kann mittels der zentralen Steuereinrichtung 20 bzw. der Modul-Steuereinrichtungen 2a, 2b, 2c auch die von den Ventilatoren 9ₐ-9_{d} erzeugte Luftströmung und/oder die vom Verdichter 3 erzeugte Kältemittelströmung reguliert werden. Insgesamt kann so die von einem Klimatisierungsmodule 10a, 10b, 10c aufgenommene und/oder abgegebene Wärmemenge und/oder eine vom und/oder ins Klimatisierungsmodul 10a, 10b, 10c strömende Luftströmung unabhängig von den weiteren vorhandenen ins Klimatisierungsmodulen 10a, 10b, 10c reguliert werden.

Neben den bislang diskutierten Komponenten kann der Hauptkältemittelkreislauf auch weitere optionale Bauteile, darunter - wie in der in Figur 2 gezeigten Ausführungsform - einen Sammler 11 zur Trennung von gasförmigen und flüssigen Kältemittel, umfassen. Da in diesem Bauteil auch ein Teil des - eventuell vorhandenen - flüssigen Kältemittels, vorzugsweise im Bodenbereich des Sammlers 11, zurückgehalten bzw. gesammelt werden kann, kann der Sammler 11 dabei auch als Sammler bzw. Sammelbehälter bezeichnet werden. Auf vorteilhafte Weise kann so sichergestellt werden, dass möglichst nur gasförmiges Kältemittel in den Verdichter 3 gelangt, da Flüssigkeiten hier Schäden verursachen könnten. Weiterhin kann der Kältemittelkreislauf 1a, 1b, 1c auch ein Zusatzkühler 12 umfassen. Dieser koppelt thermisch einen Bereich des Kältemittelkreislaufs 1a, 1b, 1c zwischen der ersten Drosseleinrichtung 4a und dem ersten Wärmeübertrager W₁ mit einem Bereich des Kältemittelkreislaufs 1a, 1b, 1c vor dem Eingang des Verdichters 3. In Figuren 2 sowie den folgenden Figuren 3-10 wird diese thermische Kopplung durch die Strichpunktlinie symbolisiert. Bevorzugt wird der Zusatzkühler 12 dabei mittels eines Wärmetauschers realisiert, jedoch können auch andere Formen der Wärmekopplung verwendet werden ohne den Bereich der Erfindung zu verlassen. Der Zusatzkühler 12 ermöglicht dabei auf vorteilhafte Weise die Wirksamkeit des Kompressors zu erhöhen.

Figur 3 zeigt einen schematischen Schaltplan eines Kältemittelkreislaufs 1a, 1b, 1c gemäß einer zweiten Ausführungsform der Erfindung. Im Vergleich zu der in Figur 2 gezeigten ersten Ausführungsform ist vorliegend im Hauptkältemittelkreislauf der zweite Wärmeübertrager W₂ anstatt als Luft/Kältemittel-Wärmeübertrager als Kühlmittel/Kältemittel-Wärmeübertrager ausgebildet. Dabei kann der Kühlmittel/Kältemittel-Wärmeübertrager beispielweise in Form eines Plattenwärmeübertragers ausgebildet sein. Unter einem Plattenwärmeübertrager soll allgemein ein Apparat verstanden werden, der wellenförmig profilierten Platten umfasst, die so zusammengesetzt sind, dass jeweils in den aufeinanderfolgenden Zwischenräumen einmal das aufzuwärmende und danach das wärmeabgebende Medium fließt. Das Plattenpaket ist vorzugsweise nach außen und zwischen den Medien abgedichtet und wird beispielsweise mit Spannschrauben zusammengehalten. Der zweite Wärmeübertrager W₂ steht vorliegend auch mit einem Kühlmittelkreislauf, der im Folgenden zur besseren Unterscheidung als erster Kühlmittelkreislauf 6a bezeichnet wird, in Verbindung. Mit anderen Worten wird der zweite Wärmeübertrager W₂ somit sowohl vom Kältemittel, vorzugsweise CO₂, des Kältemittelkreislaufs 1a, 1b, 1c als auch vom Kühlmittel, vorzugsweise Wasser, des ersten Kühlmittelkreislaufs 6a durchströmt, wobei kein Kühl- bzw. Kältemittelaustausch zwischen den beide Kreisläufen erfolgt. Der zweite Wärmeübertrager W₂ ermöglicht allerdings einen Wärmeübertrag vom Kältemittelkreislauf 1a, 1b, 1c auf den ersten Kühlmittelkreislauf 6a oder umgekehrt. Weiterhin umfasst der erste Kühlmittelkreislauf 6a eine Pumpe zur Zirkulation des Kühlmittels, die zur Unterscheidung als erste Pumpe 7a bezeichnet werden soll, sowie einen weiteren Wärmeübertrager, der im Folgenden als dritter Wärmeübertrager W₃ bezeichnet werden soll. Vorliegend handelt es sich bei dem dritten Wärmeübertrager W₃ um einen Luft/Kühlmittel-Wärmeübertrager zum Wärmeaustausch mit einem Fahrzeuginnenraum, wobei - ohne den Bereich der Erfindung zu verlassen - auch andere Bauformen von Wärmeübertragern verwendet werden können. Zur Regulierung des Luftstroms in den Fahrzeuginnenraum kann ferner auch noch ein Ventilator 9_{c} am dritten Wärmeübertrager W₃ angeordnet sein. Die Besonderheit dieser zweiten Ausführungsform liegt nun darin, dass das Heizen bzw. Kühlen des Fahrzeuginnenraums nicht durch unmittelbaren Wärmeaustausch zwischen dem Kältemittelkreislauf 1a, 1b, 1c und dem Fahrzeuginnenraum, sondern über einen mittelbaren Wärmeaustausch über den ersten Kühlmittelkreislauf 6a erfolgt. Auf vorteilhafte Weise kann dadurch die Betriebssicherheit der Klimatisierungsvorrichtung 100 erhöht werden, da so das beispielsweise Risiko einer direkten Leckage von für den Menschen oftmals gefährliche Kältemittel - wie CO₂ - in den Fahrgastraum minimiert werden kann.

Darüber hinaus unterscheidet sich der in Figur 3 gezeigte Kältemittelkreislauf 1a, 1b, 1c von dem in Figur 2 gezeigten Kältemittelkreislauf 1a, 1b, 1c - neben einer zweiten Drosseleinrichtung 4b, auf deren Funktion im Zuge der Beschreibung der beiden Betriebsmodi in Figur 6 noch eingegangen wird - durch einen weiteren Wärmeübertrager im Kältemittelkreislauf 1a, 1b, 1c. Dieser, im Folgenden als vierter Wärmeübertrager W₄ bezeichnete, Wärmeübertrager ist dadurch gekennzeichnet, dass er im ersten Betriebsmodus M₁ parallel zum zweiten Wärmeübertrager W₂ und im zweiten Betriebsmodus M₂ parallel zum ersten Wärmeübertrager W₁ schaltbar ist. Vorliegend ist auch dieser vierte Wärmeübertrager W₄ als Kühlmittel/Kältemittel-Wärmeübertrager ausgebildet und steht mit einem Kühlmittelkreislauf, der zur besseren Unterscheidung als zweiter Kühlmittelkreislauf 6b bezeichnet werden soll, in Verbindung. Besonders bevorzugt handelt es sich bei diesem zweiten Kühlmittelkreislauf 6b um einen Kühlmittelkreislauf zur Kühlung einer elektrischen Maschine und/oder eines elektrischen Energiespeichers 8, beispielsweise einer Traktionsbatterie. Zu diesem Zweck kann der zweiten Kühlmittelkreislauf 6b ferner eine, als zweite Pumpe 7b bezeichnete, Pumpe zur Zirkulation des Kühlmittels, beispielsweise Wasser, umfassen und/oder thermisch mit einer elektrischen Maschine und/oder einem elektrischen Energiespeicher 13, vorzugsweise über eine Kühlplatte, gekoppelt sein. Zudem oder alternativ kann das Kühlmittel des zweiten Kühlmittelkreislauf 6b dabei auch zumindest einen Teil einer elektrischen Maschine und/oder eines elektrischen Energiespeichers 13 um- und/oder durchströmen. Insgesamt ermöglicht der vierte Wärmeübertrager W₄ inklusive eines daran angeschlossenen zweiten Kühlmittelkreislaufs 6b, dass auf vorteilhafte Weise einerseits eine Kühlung des elektrischen Energiespeichers 8 und/oder der elektrischen Maschine erreicht werden kann, während gleichzeitig die Abwärme dieser Komponenten zur Fahrzeuginnenraumheizung verwendet werden kann.

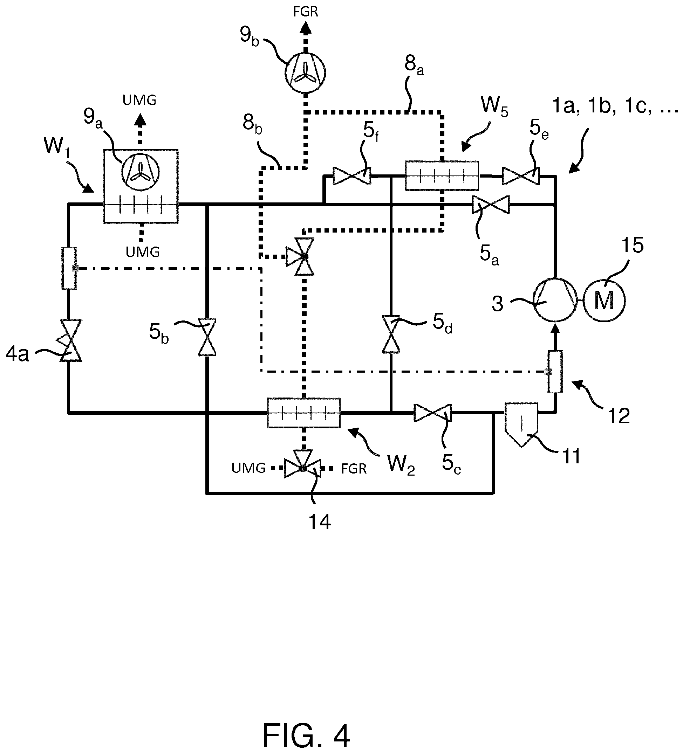

Figur 4 zeigt einen schematischen Schaltplan eines Kältemittelkreislaufs 1a, 1b, 1c gemäß einer dritten Ausführungsform der Erfindung. Neben den allen Ausführungsformen gemeinsamen Hauptkältemittelkreislauf - umfassend den Verdichter 3, den ersten Wärmeübertrager W₁, die erste Drosseleinrichtung 4a, den zweiten Wärmeübertrager W₂ sowie die Ventile 5ₐ-5_{d}weist auch diese Ausführungsform wiederum die - bereits diskutierten - optionalen Komponenten Sammler 11 und Zusatzkühler 12 auf. Kennzeichnend für diese Ausführungsform ist hierbei, dass der Kältemittelkreislauf 1a, 1b, 1c zudem einen, als fünften Wärmeübertrager W₅ bezeichneten, Wärmeübertrager sowie zwei weitere Ventile 5ₑ und 5_{f} umfasst. Der fünfte Wärmeübertrager W₅ ist vorliegend als Luft/Kältemittel-Wärmeübertrager, beispielsweise in Form eines Rippenrohr-Wärmeübertragers, eines Flachrohrwärmeübertragers und/oder eines Microchannel-Wärmeübertragers, zum Wärmeaustausch mit einem Fahrzeuginnenraum ausgebildet. Hierzu kann der fünfte Wärmeübertrager W₅ thermisch an eine Luft zum Fahrgastraum führende Luftleitung 8ₐ gekoppelt sein bzw. direkt an einen in den Fahrgastraum strömenden Luftstrom. Im Speziellen kann der fünfte Wärmeübertrager W₅ thermisch an einen Luftstrom gekoppelt sein, die zuvor bereits im thermischen Kontakt mit dem zweiten Wärmeübertrager W₂ stand. Mit anderen Worten kann ein Luftstrom zunächst Wärme mit dem zweiten Wärmeübertrager W₂ und anschließend Wärme mit dem fünften Wärmeübertrager W₅ austauschen, bevor er in den Fahrgastraum strömt. Hierbei kann der in den Fahrgastraum strömende Luftstrom nach dem Wärmeaustausch mit dem zweiten Wärmeübertrager W₂ geteilt werden, vorliegend in einen durch Luftleitung 8ₐ und einen in Luftleitung 8_{b} strömenden Teil. Während der durch Luftleitung 8_{b} strömende Luftstrom direkt in den Fahrgastraum geleitet wird, kann der durch Luftleitung 8ₐ strömende Luftstrom vor seinem Eintritt in den Fahrgastraum Wärme mit dem fünften Wärmeübertrager W₅ austauschen. Der fünfte Wärmeübertrager W₅ kann dabei durch seine Anordnung im Kältemittelkreislauf 1a, 1b, 1c sowohl im ersten Betriebsmodus M₁ als auch im zweiten Betriebsmodus M₂ in Serie zum ersten und zweiten Wärmeübertrager W₁, W₂ geschaltet werden. Auf vorteilhafte Weise ermöglicht der fünfte Wärmeübertrager W₅ im Kältemittelkreislauf 1a, 1b, 1c hierbei ein Entfeuchten der zuvor mittels des zweiten Wärmeübertragers W₂ gekühlten Luft, worauf ebenfalls bei der Darstellung der beiden Betriebsmodi M₁ und M₂ unter Figur 6 genauer eingegangen wird.

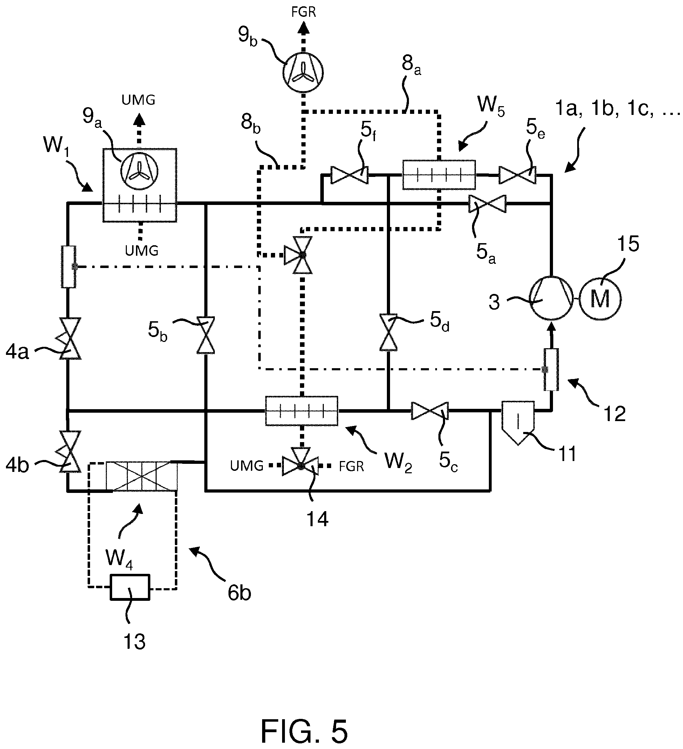

Figur 5 zeigt einen schematischen Schaltplan eines Kältemittelkreislaufs 1a, 1b, 1c gemäß einer vierten Ausführungsform der Erfindung, welche eine Weiterbildung der eben beschriebenen dritten Ausführungsform (Figur 4) darstellt. Zusätzlich zu den Komponenten der dritten Ausführungsform umfasst der Kältemittelkreislauf 1a, 1b, 1c vorliegend einen - im Zuge der Beschreibung zu Figur 3 diskutierten - vierten Wärmeübertrager W₄ sowie eine zweite Drosseleinrichtung 4b. Der vierte Wärmeübertrager W₄ ist vorliegend erneut als Kühlmittel/Kältemittel-Wärmeübertrager ausgebildet und im ersten Betriebsmodus M₁ parallel zum zweiten Wärmeübertrager W₂ sowie im zweiten Betriebsmodus M₂ parallel zum ersten Wärmeübertrager W₁ schaltbar. Wie eingehend unter Figur 3 beschrieben kann dieser vierte Wärmeübertrager W₄ mit einem zweiten Kühlmittelkreislauf 6b in Verbindung stehen, der bevorzugt zur Kühlung einer elektrischen Maschine und/oder eines elektrischen Energiespeichers 8 verwendet wird. Entsprechend kann der zweite Kühlmittelkreislauf 6b eine, als zweite Pumpe 7b bezeichnete, Pumpe zur Förderung von Kühlmittel und/oder ein oder mehrere Wärmeübertrager umfassen bzw. thermisch mit einer elektrischen Maschine und/oder einem elektrischen Energiespeicher 13 gekoppelt sein. Auf vorteilhafte Weise kann somit auch in der vierten Ausführungsform eine Kühlung des elektrischen Energiespeichers 8 und/oder der elektrischen Maschine, bei gleichzeitigem Nutzen deren Abwärme zur Fahrzeuginnenraumheizung erreicht werden.

Figur 6 zeigt die Kältemittelpfade im ersten Betriebsmodus M₁ (obere Abbildung) und zweiten Betriebsmodus M₂ (untere Abbildung) für die eben beschriebene vierte Ausführungsform der Erfindung (Figur 5). Aus Gründen der Übersichtlichkeit wurde dabei - mit Ausnahme der Ventile 5ₐ-5_{f} - auf Bezugszeichen verzichtet. Im Fall des ersten Betriebsmodus M₁ zur Fahrzeuginnenraumkühlung (obere Abbildung) strömt - angetrieben vom Verdichter 3 - gasförmiges und durch den Verdichter 3 unter einem hohen Druck gesetztes Kältemittel über das offene Ventil 5ₐ in Richtung des ersten Wärmeübertragers W₁, wobei der optionale fünfte Wärmeübertrager W5 durch Öffnen der Ventile 5ₑ und 5_{f} in den Kältemittelkreislauf 1a, 1b, 1c miteingebunden werden kann. Der erste Wärmeübertrager W₁ sowie der optionale fünfte Wärmeübertrage W₅ fungieren im Betriebsmodus M₁ als Kondensatoren und/oder Gaskühler. D. h., im Bereich dieser Komponenten geht das gasförmige Kältemittel, vorzugsweise CO₂, unter Wärmeabgabe in den flüssigen Zustand über. Im Fall des ersten Wärmeübertragers W₁ wird diese Wärme dabei an den Fahrzeugaußenraum und im optionalen Fall des fünften Wärmeübertragers W₅ an einen - in Luftleitung 8ₐ geführten - Luftstrom zum Fahrzeuginnenraum abgegeben. Im Anschluss daran, d. h., nach dem ersten Wärmeübertrager W₁, passiert das Kältemittel dann die erste Drosseleinrichtung 4a, durch die das Kältemittel entspannt, d. h. der Druck abgebaut, wird, wodurch sich die Siedetemperatur des Kältemittels erniedrigt. Im nachgeschalteten zweiten Wärmeübertrager W₂ verdampft das Kältemittel unter Wärmeaufnahme aus der Umgebung des zweiten Wärmeübertragers W₂. Entsprechend fungiert der zweite Wärmeübertrager W₂ als Verdampfer. Die Wärme stammt vorzugsweise aus dem Fahrzeuginnenraum, wodurch dieser abgekühlt wird. Hierzu steht der zweite Wärmeübertragen W₂- wie bereits diskutiert-mit einer Luftleitung 8b in Verbindung, die Luft zum Fahrzeuginnenraum führenden kann. Anschließend strömt das Kältemittel über das geöffnete Ventil 5c strömt zurück zum Verdichter 3, bei dem das gasförmige Kältemittel komprimiert wird und der Prozess von neuem beginnt.

Parallel zur Durchströmung des zweiten Wärmebetrages W₂, kann in einer optionalen Variante ein Teil des Kältemittels auch über eine weitere, als zweite Drosseleinrichtung 4b bezeichnete, Drosseleinrichtung und einen vierten Wärmeübertrage W₄ zum Verdichter 3 strömen. Der vierte Wärmeübertrager W₄ ist hierbei vorzugsweise über einen zweiten Kühlmittelkreislauf 6b thermisch mit einem elektrischen Energiespeicher 13 gekoppelt. Auch der vierte Wärmeübertrager W₄ fungiert vorliegend als Verdampfer und nimmt vorzugsweise überschüssige Abwärme des elektrischen Energiespeichers 13 auf und transportiert diese mittels des zweiten Kühlmittelkreislaufs 6b zum vierten Wärmeübertrager W₄. Auf vorteilhafte Weise kann somit einerseits eine notwendige Kühlung des elektrischen Energiespeichers 13 und/oder einer anderen mit dem zweiten Kühlmittelkreislaufs 6b in thermischen Kontakt stehenden elektrischen Maschine erreicht werden. Die Abwärme dieser Komponenten wird dabei vorliegend nicht ungenutzt an die Fahrzeugumgebung abgegeben, sondern über den fünften Wärmeübertrager W5 zur Entfeuchtung der zuvor mittels des zweiten Wärmeübertragers W₂ gekühlten Luft verwendet. D. h. in diesem Betriebsmodus kann Luft aus dem Fahrzeuginnenraum und/oder dem Fahrzeugaußenraum mittels des zweiten Wärmeübertragers W₂ gekühlt, anschließend mittels des fünften Wärmeübertrager W₅ leicht erwärmt und damit entfeuchtet und zuletzt in den Fahrzeuginnenraum geleitet werden.

Die untere Abbildung zeigt die Strömungsführung bzw. die Kältemittelpfade im Fall des zweiten Betriebsmodus M₂ zur Fahrzeuginnenraumheizung. Ausgehend vom Verdichter 3 strömt das gasförmige Kältemittel im Betriebsmodus M₂ nicht wie zuvor zunächst zum ersten sondern zum zweiten Wärmeübertrager W₂, wobei diesem in der vorliegenden Ausführungsform der optionale fünfte Wärmeübertrager W₅ vorgeschaltet ist. Hierzu werden vorliegend die Ventil 5ₐ und 5_{f} geschlossen, während die Ventile 5ₑ und 5_{d} geöffnet sind. Sind der optionale fünfte Wärmeübertrager W₅ samt der entsprechenden optionalen Ventile 5ₑ und 5_{f} nicht vorhanden, so kann durch entsprechendes Versetzen des Ventils 5ₐ (siehe Figur 2) dasselbe Umleiten des Kältemittelflusses erreicht werden. Sowohl der fünfte Wärmeübertrager W₅ als auch der zweite Wärmeübertrager W₂ fungieren im zweiten Betriebsmodus M₂ als Kondensatoren bzw. Gaskühler. D. h., gasförmiges Kältemittel wird dort unter Wärmeabgabe teilweise bzw. komplett verflüssigt. Diese Wärmemenge kann hierbei an einen Luftstrom zum Fahrzeuginnenraum abgegeben werden, wodurch dieser beheizt werden kann. Nach dem zweiten Wärmeübertrager W₂ strömt das verflüssigte Kältemittel im Hauptkältemittelkreislauf weiter zur ersten Drosseleinrichtung 4a und wird dort entspannt, bevor es in den ersten Wärmeübertrager W₁ tritt. Der erste Wärmeübertrager W₁ fungiert dabei als Verdampfer, d. h. das zunächst noch flüssige Kältemittel verdampft, wobei der Umgebung des ersten Wärmeübertrager W₁ - vorliegend dem Fahrzeugaußenraum - Wärme entzogen wird. Über das geöffnete Ventil 5_{b} strömt das gasförmige Kältemittel dann erneut zum Verdichter 3 und der Zyklus beginnt erneut. Parallel dazu kann in der vorliegenden Ausführungsform ein Teil des Kältemittels wiederum auch über die optionale zweite Drosseleinrichtung 4b entspannt werden und in den vierten Wärmeübertrager W₄ eintreten, bevor es zum Verdichter 3 gelangt. Der vierte Wärmeübertrager W₄ fungiert somit im zweiten Betriebsmodus M₂ - wie auch im ersten Betriebsmodus M₁ - als Verdampfer und nimmt Abwärme beispielsweise eines thermisch an den vierten Wärmeübertrager W₄ gekoppelten elektrischen Energiespeichers 13 auf.

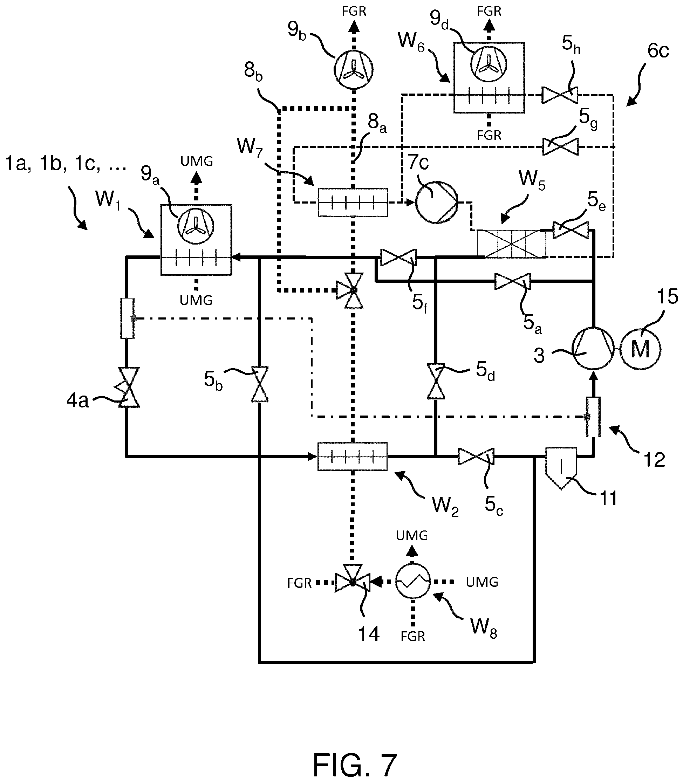

Figur 7 zeigt einen schematischen Schaltplan eines Kältemittelkreislaufs 1a, 1b, 1c gemäß einer fünften Ausführungsform der Erfindung. Der Hauptkältemittelkreislauf entspricht hierbei im Wesentlichen der in Figur 4 gezeigten dritten Ausführungsform. Allerdings ist der fünfte Wärmeübertrager W₅ nun als Kühlmittel/Kältemittel-Wärmeübertrager, vorzugsweise als Platten-Wärmeübertrager, ausgebildet und steht mit einem Kühlmittelkreislauf der nachfolgend als dritter Kühlmittelkreislauf 6c bezeichnet wird, in Verbindung. Der dritte Kühlmittelkreislauf 6c umfasst hierbei des Weiteren folgende Komponenten: eine, als dritte Pumpe 7c bezeichnete, Pumpe, die Ventile 5ₕ und 5_{g} sowie zwei Wärmeübertrage, die zur besseren Unterscheidung als sechster und siebter Wärmeübertrager W₆, W₇ bezeichnet werden. Während der siebte Wärmeübertrage W₇ - wie bereits beschrieben - zur Entfeuchtung des zum Fahrgastraum strömenden Luftstroms dient, ermöglicht der sechste Wärmeübertrager W₆ eine weitere, d. h. räumlich vom siebten Wärmeübertrage W₇ getrennte, Wärmeeinbringung in den Fahrgastraum, z. B. im Bodenbereich des Fahrzeuginnenraums, um so auf vorteilhafte Weise einer vertikalen Luftschichtung entgegenzuwirken. Hierzu kann im Bereich des sechsten Wärmeübertragers W₆ ein Ventilator 9_{d} zur Regulierung des Luftstroms angeordnet sein, der unabhängig von den weiteren Ventilatoren 9ₐ und 9_{b} geregelt werden kann. Ferner umfasst die vorliegende fünfte Ausführungsform der Erfindung einen optionalen achten Wärmeübertrager W₈ im Bereich der Frischluftansaugung. Der achte Wärmeübertrager W₈ ist dabei vorzugsweise in Form eines Luft/Luft-Wärmeübertragers ausgebildet. Auf vorteilhafte Weise kann dadurch die Abwärme des Fahrgastraums zum Vorwärmen der aus dem Fahrzeugaußenraum einströmenden Frischluft genutzt werden.

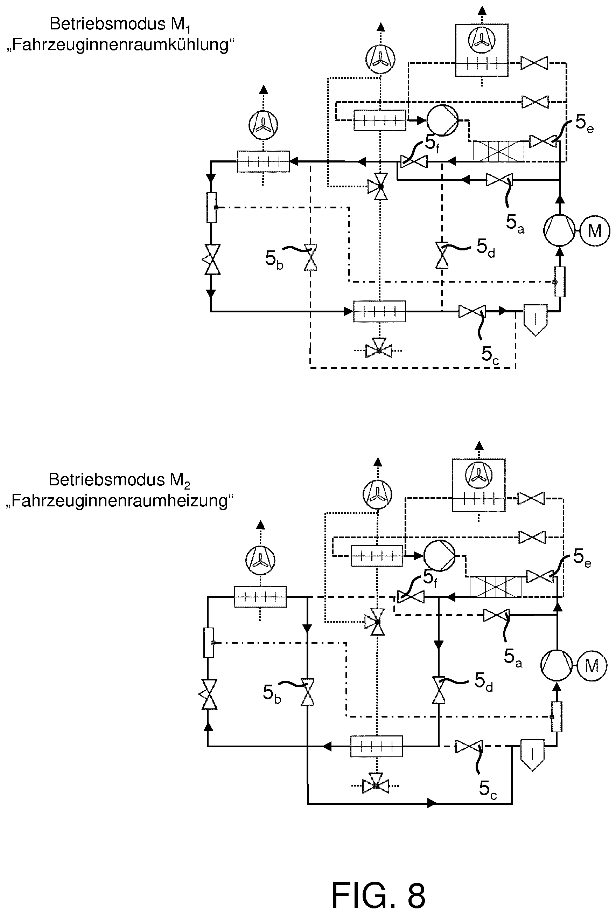

Figur 8 zeigt die Strömungsführung für die eben in Figur 7 gezeigte fünfte Ausführungsform der Erfindung im ersten und zweiten Betriebsmodus M₁ und M₂. Hierbei ist erneut in der oberen Abbildung die Strömungsführung im ersten Betriebsmodus M₁ zur Fahrzeuginnenraumkühlung und in der unteren Abbildung die Strömungsführung im zweiten Betriebsmodus M₂ zur Fahrzeuginnenraumheizung dargestellt. Abgesehen vom Fehlen des vierten Wärmeübertrages W₄ zur Energiespeicherkühlung (links unten) entspricht die Strömungsführung allerdings erneut dem bereits unter Figur 6 diskutierten Fall, weshalb für entsprechende Details auf die Figurenbeschreibung zu Figur 6 verwiesen wird. Auch in der in Figur 8 dargestellten Ausführungsform erfolgt das Umschalten zwischen den beiden Betriebsmodi M₁ und M₂ ebenfalls mittels der Ventile 5ₐ-5_{f}. Im ersten Betriebsmodus M₁ sind dabei die Ventile 5ₐ, 5_{c}, 5ₑ, und 5f geöffnet, während die Ventile 5_{b} und 5_{d} geschlossen sind. Im zweiten Betriebsmodus M₂ sind die Ventile 5_{b}, 5_{d} und 5ₑ geöffnet und die Ventile 5ₐ, 5_{c} und 5_{f} geschlossen.

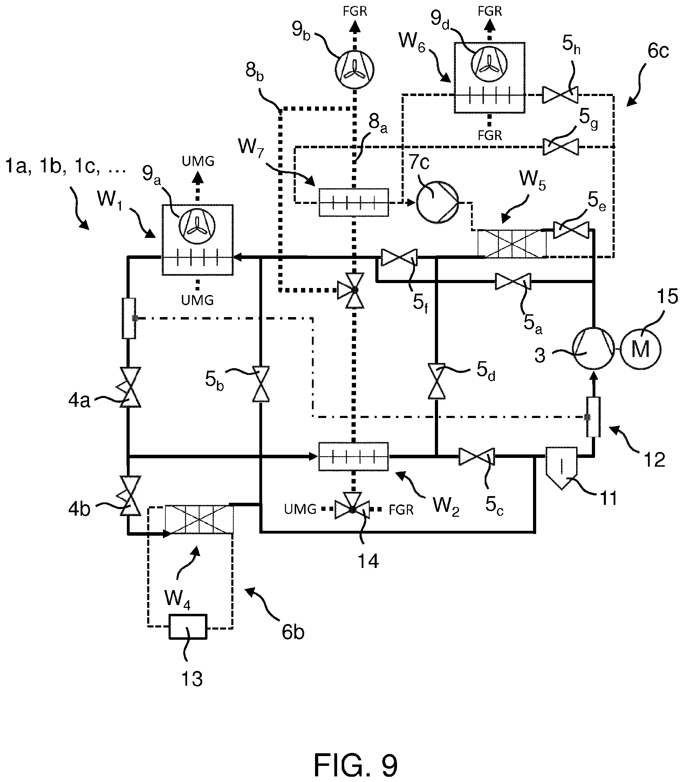

Figur 9 zeigt einen schematischen Schaltplan eines Kältemittelkreislaufs 1a, 1b, 1c eines Klimatisierungsmoduls 10a, 10b, 10c nach einer sechsten Ausführungsform der Erfindung. Der vorliegende Kältemittelkreislauf 1a, 1b, 1c entspricht dabei im Wesentlichen der zuvor in Figur 7 dargestellten Ausführungsform, weist jedoch zusätzlich eine zweite Drosseleinrichtung 4b sowie einen vierten Wärmeübertrager W₄ inklusive eines daran angeschlossenen zweiten Kühlmittelkreislaufs 6b zu Energiespeicherkühlung auf. Mögliche Varianten und Funktionen des zweiten Kühlmittelkreislaufs 6b wurden bereits vorstehend eingehend diskutiert und sind beispielsweise der Figurenbeschreibung zu Figur 3 zu entnehmen.

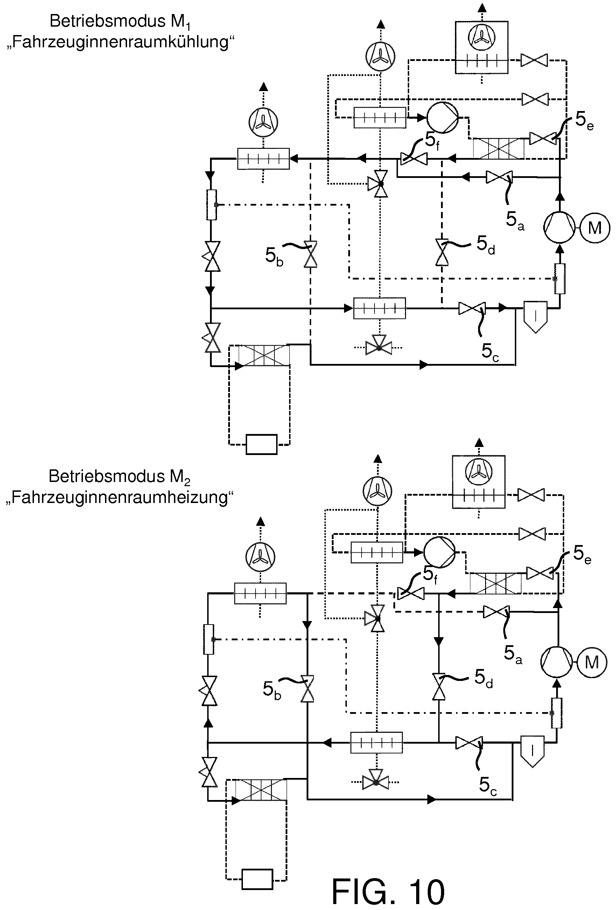

Figur 10 zeigt die Strömungsführung für die eben in Figur 9 gezeigte sechste Ausführungsform der Erfindung im ersten und zweiten Betriebsmodus M₁ und M₂. Erneut unterscheidet sich die Ausgestaltung des Hauptkältemittelkreislaufs nicht von den bisherigen Ausführungsformen, weshalb sich weitere Ausführungen erübrigen. Erneut sei hierzu auf die Figurenbeschreibung zu Figur 6 verwiesen.

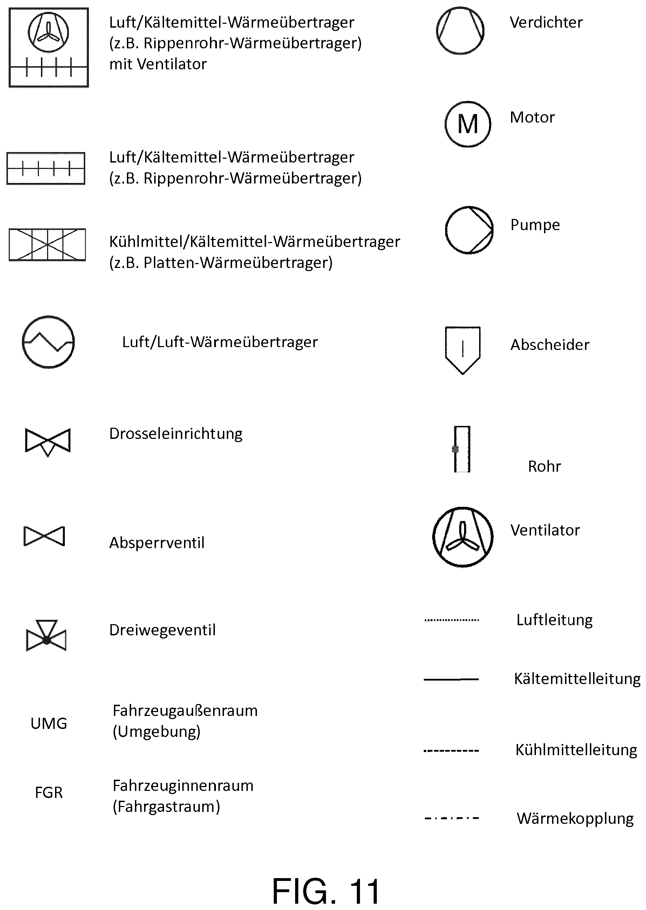

In Figur 11 ist eine Legende zu den in den Figuren 2-10 dargestellten schematischen Schaltplänen gezeigt. Die dabei verwendeten Symbole entsprechend der DIN 1861, sind jedoch aus Gründen der Übersichtlichkeit zusätzlich mit den entsprechenden Bauteilnamen bezeichnet.

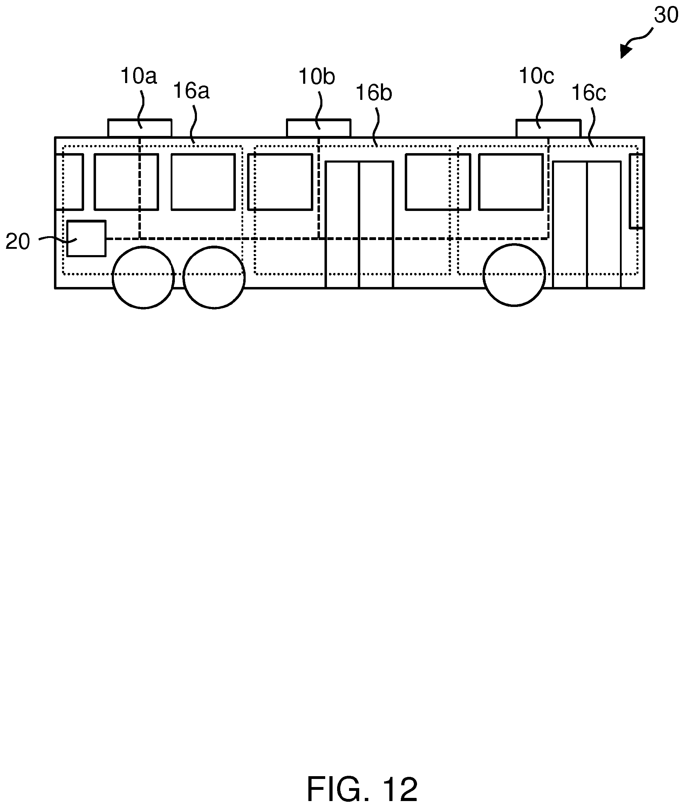

Figur 12 zeigt eine schematische Darstellung eines Kraftfahrzeugs 30 gemäß einer Ausführungsform der Erfindung. Bei dem Kraftfahrzeug 30 handelt es sich vorliegend um einen Omnibus, vorzugsweise einen rein elektrisch angetrieben Omnibus. Dieser weist hierbei eine modulare Klimatisierungsvorrichtung 100 auf. Die Klimatisierungsvorrichtung 100 umfasst hierbei mindestens zwei - in der vorliegenden Ausführungsform drei -, vorzugsweise auf dem Fahrzeugdach angeordnete, Klimatisierungsmodule 10a, 10b, 10c, die jeweils einen Kältemittelkreislauf 1a, 1b, 1c und eine Modulsteuereinrichtung 2a, 2b, 2c umfassen (nicht dargestellt), wobei es für den Fachmann offensichtlich ist, dass das Kraftfahrzeug 30 auch mehr als drei Klimatisierungsmodule 10a, 10b, 10c umfassen kann. Weiterhin umfasst das Kraftfahrzeug 30 eine zentrale Steuereinrichtung 20, die ausgebildet ist jedes der drei Klimatisierungsmodule 10a, 10b, 10c unabhängig voneinander wahlweise in einem ersten Betriebsmodus M₁ zur Fahrzeuginnenraumkühlung oder in einem zweiten Betriebsmodus zur Fahrzeuginnenraumheizung M₂ zu betreiben. Dies schließt allerdings nicht aus, dass die Klimatisierungsmodule 10a, 10b, 10c wahlweise auch in weiteren Betriebsmodi betrieben werden können. So können die einzelnen Klimatisierungsmodule 10a, 10b, 10c beispielsweise auch ganz deaktiviert, d. h. funktionslos gestellt, werden. Erfindungsgemäß wird somit ein Kraftfahrzeug 30 mit einer modulare Klimatisierungsvorrichtung 100 bereitgestellt, bei der die einzelnen Klimatisierungsmodule 10a, 10b, 10c gleichzeitig unterschiedliche Funktionen ausführen können, bzw. die Anzahl der betriebenen Klimatisierungsmodule 10a, 10b, 10c variabel eingestellt werden kann.

Zur Ansteuerung der jeweiligen Klimatisierungsmodule 10a, 10b, 10c steht die zentrale Steuereinrichtung 20 mit den Klimatisierungsmodulen 10a, 10b, 10c über entsprechende Kommunikations- bzw. Datenleitungen, beispielsweise in Form von CAN- und/oder LIN-Busleitungen, in Verbindung. Entsprechend kann die zentralen Steuereinrichtung 20 somit sowohl Steuerbefehle an die einzelnen Modul-Steuereinrichtungen 2a, 2b, 2c senden, als von diesen Informationen betreffend das jeweilige Klimatisierungsmodul 10a, 10b, 10c empfangen. In diesem Zusammenhang kann somit auch von einem Master-Slave-System gesprochen werden. Weiterhin können die Kältemittelkreisläufe 1a, 1b, 1c der einzelnen Klimatisierungsmodule 10a, 10b, 10c identisch sein, beispielsweise gemäß eines der zuvor beschriebenen Ausführungsbeispiele. Alternativ können die einzelnen Klimatisierungsmodule 10a, 10b, 10c jedoch auch verschiedene Ausführungsformen der Kältemittelkreisläufe 1a, 1b, 1c aufweisen. Vorzugsweise sind die einzelnen Klimatisierungsmodule 10a, 10b, 10c ferner auch jeweils einem bestimmten Bereich 16a, 16b, 16c des Fahrzeugsinnenraums zugeordnet, wodurch eine zonale Klimatisierung des Fahrzeuginnenraums erreicht werden kann. Beispielsweise kann vorliegend das Klimatisierungsmodul 10c einem Bereich 16c um den Fahrersitz zugeordnet sein, das Klimatisierungsmodule 10b einem mittleren Bereich 16b des Kraftfahrzeugs 30 und das Klimatisierungsmodul 10a einem hinteren Bereich 16a des Kraftfahrzeugs 30 zugeordnet sein. Befindet sich der Omnibus somit beispielsweise auf einer Betriebsfahrt, d. h. dass sich lediglich der Busfahrer im Fahrzeuginnenraum aufhält, kann z. B. nur das Klimatisierungsmodul 10c zur Klimatisierung verwendet werden, während die Klimatisierungsmodule 10a und 10b inaktiv sind. Insgesamt wird somit auf vorteilhafte Weise ein Kraftfahrzeug 30 mit einer modularen und damit skalierbare bzw. je nach Einsatzbereich und/oder Kraftfahrzeug 30 flexibel anpassbare Klimatisierungsvorrichtung 100 bereitgestellt.

Obwohl die jeweils einen Kältemittelkreislauf I die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1a, 1b, 1c: Kältemittelkreislauf
- 2a, 2b, 2c: Modul-Steuereinrichtung
- 3: Verdichter
- 4a: Erste Drosseleinrichtung
- 4b: zweite Drosseleinrichtung
- 5: Ventileinrichtung
- 5ₐ-5ₕ: Ventile
- 6a: Erster Kühlmittelkreislauf
- 6b: Zweiter Kühlmittelkreislauf
- 6c: Dritter Kühlmittelkreislauf
- 7a: Erste Pumpe
- 7b: Zweite Pumpe
- 7c: Dritte Pumpe
- 8ₐ, 8_{b}: Luftleitung
- 9ₐ-9_{d}: Ventilator
- 10a, 10b, 10c: Klimatisierungsmodul
- 11: Sammler
- 12: Zusatzkühler
- 13: Energiespeicher
- 14: Dreiwegeventil
- 15: Motor
- 16a: Erster Bereich
- 16b: Zweiter Bereich
- 16c: Dritter Bereich
- 20: Zentrale Steuereinrichtung
- 30: Nutzfahrzeug
- W₁: Erster Wärmeübertrager
- W₂: Zweiter Wärmeübertrager
- W₃: Dritter Wärmeübertrager
- W₄: Vierter Wärmeübertrager
- W5: Fünfter Wärmeübertrager
- UMG: Umgebung
- FGR: Fahrgastraum

## Patentansprüche

1. Modulare Klimatisierungsvorrichtung (100) für ein Kraftfahrzeug (30), vorzugsweise für ein elektrisch angetriebenes Kraftfahrzeug (30), umfassend:
a) mindestens zwei Klimatisierungsmodule (10a, 10b) die jeweils einen Kältemittelkreislauf (1a, 1b) mit folgende Komponenten umfassen:
- einen, vorzugsweise elektrisch angetriebenen, Verdichter (3);
- einen ersten Wärmeübertrager (W₁) zum Wärmeaustausch mit einem Fahrzeugaußenraum oder einer Komponente eines elektrischen Antriebs;
- eine erste Drosseleinrichtung (4a);
- einen zweiten Wärmeübertrager (W₂) zum Wärmeaustausch mit einem Fahrzeuginnenraum; und
- eine Ventileinrichtung (5), umfassend eine Mehrzahl von Ventilen (5ₐ-5_{d}), zur Steuerung eines Kältemittelflusses innerhalb des Kältemittelkreislaufs (1a, 1b), mittels derer der erste Wärmeübertrager (W₁) in einem ersten Betriebsmodus M₁ zur Fahrzeuginnenraumkühlung stromauf und in einem zweiten Betriebsmodus M₂ zur Fahrzeuginnenraumheizung stromab vom zweiten Wärmeübertrager (W₂) im Kältemittelkreislauf (1a, 1b) schaltbar ist;
und wobei die Klimatisierungsmodule (10a, 10b) jeweils eine Modul-Steuereinrichtung (2a, 2b) zur jeweiligen Ansteuerung der Ventileinrichtung (5) und/oder des Verdichters (3) umfassen;
b) eine zentrale Steuereinrichtung (20), die ausgebildet ist, jedes der Klimatisierungsmodule (10a, 10b) unabhängig voneinander wahlweise im ersten Betriebsmodus M₁ oder im zweiten Betriebsmodus M₂ zu betreiben.

2. Klimatisierungsvorrichtung (100) nach Anspruch 1, **dadurch gekennzeichnet, dass** der Verdichter (3) mindestens eines Klimatisierungsmoduls (10a, 10b) ein Hochspannungskompressor ist, der vorzugsweise mit einer Spannung zwischen 250-800 V betrieben wird.

3. Klimatisierungsvorrichtung (100) nach einem der vorherigen Ansprüche, **dadurch gekennzeichnet, dass** der Kältemittelkreislauf (1a, 1b) mindestens eines Klimatisierungsmoduls (10a, 10b) einen vierten Wärmeübertrager (W₄) umfasst, der im ersten Betriebsmodus M₁ parallel zum zweiten Wärmeübertrager (W₂) und im zweiten Betriebsmodus M₂ parallel zum ersten Wärmeübertrager (W₁) im Kältemittelkreislauf (1a, 1b) geschaltet ist, wobei der vierten Wärmeübertrager (W₄) in Verbindung mit einem zweiten Kühlmittelkreislauf (6b) steht, der vorzugsweise zur Kühlung eines elektrischen Energiespeichers (13) und/oder einer elektrischen Maschine ausgebildet ist.

4. Klimatisierungsvorrichtung (100) nach einem der vorherigen Ansprüche, **dadurch gekennzeichnet, dass** der Kältemittelkreislauf (1a, 1b) mindestens eines Klimatisierungsmoduls (10a, 10b) einen fünften Wärmeübertrager (W₅) umfasst, der sowohl im ersten Betriebsmodus M₁ als auch zweiten Betriebsmodus M₂ in Serie zum ersten und zweiten Wärmeübertrager (W₁, W₂) im Kältemittelkreislauf (1a, 1b) geschaltet ist.

5. Klimatisierungsvorrichtung (100) nach Anspruch 4, **dadurch gekennzeichnet, dass** der fünfte Wärmeübertrager (W₅) ein Luft/Kältemittel-Wärmeübertrager, vorzugsweise in Form eines Rippenrohrs, ist, der thermisch an eine Luftleitung (8ₐ) zum Wärmeaustausch mit dem Fahrzeuginnenraum gekoppelt ist.

6. Klimatisierungsvorrichtung (100) nach Anspruch 4, **dadurch gekennzeichnet, dass** der fünfte Wärmeübertrager (W₅) ein Kühlmittel/Kältemittel-Wärmeübertrager, vorzugsweise in Form eines Plattenwärmeübertragers, ist, der in Verbindung mit einem dritten Kühlmittelkreislauf (6c) steht.

7. Klimatisierungsvorrichtung (100) nach Anspruch 6, **dadurch gekennzeichnet, dass** der dritte Kühlmittelkreislauf (6c) zusätzlich eine dritte Pumpe (7c), einen sechsten Wärmeübertrager (W₆) und einen siebten Wärmeübertrager (W₇) zum Wärmeaustausch mit dem Fahrzeuginnenraum umfasst.

8. Klimatisierungsvorrichtung (100) nach einem der vorherigen Ansprüche, **dadurch gekennzeichnet, dass** der Kältemittelkreislauf (1a, 1b) mindestens eines Klimatisierungsmoduls (10a, 10b) thermisch direkt an einen elektrischen Energiespeicher (13), vorzugsweise eine Traktionsbatterie, und/oder an eine elektrische Maschine gekoppelt ist.

9. Klimatisierungsvorrichtung (100) nach einem der vorherigen Ansprüche, **dadurch gekennzeichnet, dass** mindestens eines der Klimatisierungsmodule (10a, 10b) mindestens eine Luftklappe und/oder mindestens einen Ventilator (9ₐ) umfasst und die Steuereinrichtung (20) ausgebildet ist, die von dem jeweiligen Klimatisierungsmodul (10a, 10b) geförderte Luftmenge, vorzugsweise unabhängig von den weiteren Klimatisierungsmodulen (10a, 10b), zu steuern.

10. Klimatisierungsvorrichtung (100) nach einem der vorherigen Ansprüche, **dadurch gekennzeichnet, dass** der Kältemittelkreislauf (1a, 1b) mindestens eines Klimatisierungsmoduls (10a, 10b)
a) CO₂ und/oder Propan als Kältemittel verwendet; und/oder
b) einen Sammler (11) umfasst; und/oder
c) einen Zusatzkühler (12) umfasst, der einen Bereich des Kältemittelkreislaufs (1a, 1b) zwischen der Drosseleinrichtung (4ₐ) und ersten Wärmeübertrager (W₁) mit einem Bereich des Kältemittelkreislaufs (1a, 1b) vor dem Eingang des Verdichters (3) thermisch koppelt.

11. Kraftfahrzeug (30), vorzugsweise Nutzfahrzeug, mit einer modularen Klimatisierungsvorrichtung (100) nach einem der Ansprüche 1-10.

12. Kraftfahrzeug (30) nach Anspruch 11, **dadurch gekennzeichnet, dass** das Kraftfahrzeug (30) ein Elektrofahrzeug, vorzugsweise ein elektrischer Omnibus, ist und/oder mindestens eines der Klimatisierungsmodule (10a, 10b) im Bereich des Daches des Kraftfahrzeugs (30) angeordnet ist.

13. Kraftfahrzeug (30) nach einem der Ansprüche 11-12, **dadurch gekennzeichnet, dass** zur zonalen Klimatisierung des Fahrzeuginnenraums jedes der Klimatisierungsmodule (10a, 10b) einem Bereich (16a, 16b) des Fahrzeuginnenraums zugeordnet ist.

14. Kraftfahrzeug (30) nach Anspruch 13, **dadurch gekennzeichnet, dass** die zentrale Steuereinrichtung (20) ausgebildet ist, entsprechend einer Maßgabe
a) einen Teil der Klimatisierungsmodule (10a, 10b) zu aktivieren und/oder einen Teil der Klimatisierungsmodule (10a, 10b) zu deaktivieren; und/oder
b) einen Teil der Klimatisierungsmodule (10a, 10b) im ersten Betriebsmodus M₁ und/oder einen Teil der Klimatisierungsmodule (10a, 10b) im zweiten Betriebsmodus M₂ zu betreiben.

## Claims

1. A modular air-conditioning apparatus (100) for a motor vehicle (30), preferably for an electrically driven motor vehicle (30), comprising:
a) at least two air-conditioning modules (10a, 10b), which respectively comprise a refrigerant circuit (1a, 1b) having the following components:
- a, preferably electrically driven, compressor (3) ;
- a first heat exchanger (W₁) for exchange of heat with the space outside the vehicle and/or with a component of an electric drive;
- a first throttling device (4a);
- a second heat exchanger (W₂) for exchange of heat with the space inside the vehicle; and
- a valve device (5), comprising a plurality of valves (5ₐ-5_{d}), for controlling a refrigerant flow within the refrigerant circuit (1a, 1b), by means of which the first heat exchanger (W₁) can be connected in a first operating mode M₁, for cooling the space inside the vehicle, upstream and in a second operating mode M₂, for heating the space inside the vehicle, downstream of the second heat exchanger (W₂) in the refrigerant circuit (1a, 1b);
and wherein the air-conditioning modules (10a, 10b) respectively comprise a module control device (2a, 2b) for the respective control of the valve device (5) and/or of the compressor (3)
b) a central control device (20), which is designed to operate each of the air-conditioning modules (10a, 10b) selectively in the first operating mode M₁ or in the second operating mode M₂ independently of one another.

2. The air-conditioning apparatus (100) according to Claim 1, **characterized in that** the compressor (3) of at least one air-conditioning module (10a, 10b) is a high-voltage compressor, which is preferably operated with a voltage of between 250 and 800 V.

3. The air-conditioning apparatus (100) according to one of the preceding claims, **characterized in that** the refrigerant circuit (1a, 1b) of at least one air-conditioning module (10a, 10b) comprises a fourth heat exchanger (W₄), which is connected in the first operating mode M₁ in parallel with the second heat exchanger (W₂) and in the second operating mode M₂ in parallel with the first heat exchanger (W₁) in the refrigerant circuit (1a, 1b), wherein the fourth heat exchanger (W₄) is connected to a second coolant circuit (6b), which is preferably designed for cooling an electrical energy store (13) and/or an electric machine.

4. The air-conditioning apparatus (100) according to one of the preceding claims, **characterized in that** the refrigerant circuit (1a, 1b) of at least one air-conditioning module (10a, 10b) comprises a fifth heat exchanger (W₅), which is connected, both in the first operating mode M₁ and the second operating mode M₂, in series with the first and second heat exchangers (W₁, W₂) in the refrigerant circuit (1a, 1b).

5. The air-conditioning apparatus (100) according to Claim 4, **characterized in that** the fifth heat exchanger (W₅) is an air/refrigerant heat exchanger, preferably in the form of a finned-tube heat exchanger, which is thermally coupled to an air line (8ₐ) for exchange of heat with the space inside the vehicle.

6. The air-conditioning apparatus (100) according to Claim 4, **characterized in that** the fifth heat exchanger (W₅) is a coolant/refrigerant heat exchanger, preferably in the form of a plate-type heat exchanger, which is connected to a third coolant circuit (6c).

7. The air-conditioning apparatus (100) according to Claim 6, **characterized in that** the third coolant circuit (6c) additionally comprises a third pump (7c), a sixth heat exchanger (W₆) and a seventh heat exchanger (W₇) for exchange of heat with the space inside the vehicle.

8. The air-conditioning apparatus (100) according to one of the preceding claims, **characterized in that** the refrigerant circuit (1a, 1b) of at least one air-conditioning module (10a, 10b) is thermally coupled directly to an electrical energy store (13), preferable a traction battery, and/or to an electric machine.

9. The air-conditioning apparatus (100) according to one of the preceding claims, **characterized in that** at least one of the air-conditioning modules (10a, 10b) comprises at least one air flap and/or at least one fan (9ₐ), and the control device (20) is designed to control, preferably independently of the further air-conditioning modules (10a, 10b), the air quantity conveyed by the respective air-conditioning module (10a, 10b).

10. The air-conditioning apparatus (100) according to one of the preceding claims, **characterized in that** the refrigerant circuit (1a, 1b) of at least one air-conditioning module (10a, 10b)
a) uses CO₂ and/or propane as refrigerant; and/or
b) comprises a collector (11); and/or
c) comprises an additional cooler (12) which thermally couples a region of the refrigerant circuit (1a, 1b) between the throttling device (4ₐ) and the first heat exchanger (W₁) to a region of the refrigerant circuit (1a, 1b) before the inlet of the compressor (3).

11. A motor vehicle (30), preferably a utility vehicle, having a modular air-conditioning apparatus (100) according to one of Claims 1-10.

12. The motor vehicle (30) according to Claim 11, **characterized in that** the motor vehicle (30) is an electric vehicle, preferably an electric omnibus, and/or at least one of the air-conditioning modules (10a, 10b) is arranged in the region of the roof of the motor vehicle (30).

13. The motor vehicle (30) according to either of Claims 11 and 12, **characterized in that**, for zonal air-conditioning of the space inside the vehicle, each of the air-conditioning modules (10a, 10b) is assigned to a region (16a, 16b) of the space inside the vehicle.

14. The motor vehicle (30) according to Claim 13, **characterized in that** the central control device (20) is designed for, in accordance with a specification,
a) activating a portion of the air-conditioning modules (10a, 10b) and/or deactivating a portion of the air-conditioning modules (10a, 10b); and/or
b) operating a portion of the air-conditioning modules (10a, 10b) in the first operating mode M₁ and/or a portion of the air-conditioning modules (10a, 10b) in the second operating mode M₂.

## Revendications

1. Dispositif de climatisation modulaire (100) destiné à un véhicule automobile (30), de préférence un véhicule automobile à propulsion électrique (30), ledit dispositif comprenant :
a) au moins deux modules de climatisation (10a, 10b), qui comprennent chacun un circuit de réfrigérant (1a, 1b) pourvu des composants suivants :
- un compresseur (3) de préférence entraîné électriquement ;
- un premier échangeur de chaleur (W₁) destiné à échanger de la chaleur avec un espace de véhicule extérieur et/ou un composant d'un entraînement électrique ;
- un premier organe d'étranglement (4a) ;
- un deuxième échangeur de chaleur (W₂) destiné à échanger de la chaleur avec un espace de véhicule intérieur; et
- un organe à soupapes (5) qui comprend une pluralité de soupapes (5ₐ-5_{d}), qui est destiné à commander un débit de réfrigérant à l'intérieur du circuit de réfrigérant (1a, 1b) et qui permet de commuter le premier échangeur de chaleur (W₁) dans un premier mode de fonctionnement M₁ afin de refroidir l'espace de véhicule intérieur en amont et dans un deuxième mode de fonctionnement M₂ afin de chauffer l'espace de véhicule intérieur en aval du deuxième échangeur de chaleur (W₂) dans le circuit de réfrigérant (1a, 1b) ;
et les modules de climatisation (10a, 10b) comprenant chacun un organe de commande de module (2a, 2b) destiné à commander respectivement l'organe à soupapes (5) et/ou le compresseur (3) ;
b) un organe de commande central (20) qui est conçu pour faire fonctionner chacun des modules de climatisation (10a, 10b) indépendamment les uns des autres, au choix dans le premier mode de fonctionnement M₁ ou dans le deuxième mode de fonctionnement M₂.

2. Dispositif de climatisation (100) selon la revendication 1, **caractérisé en ce que** le compresseur (3) d'au moins un module de climatisation (10a, 10b) est un compresseur à haute tension qui fonctionne de préférence avec une tension comprise entre 250 et 800 V.

3. Dispositif de climatisation (100) selon l'une des revendications précédentes, **caractérisé en ce que** le circuit de réfrigérant (1a, 1b) d'au moins un module de climatisation (10a, 10b) comprend un quatrième échangeur de chaleur (W₄) qui est commuté dans le premier mode de fonctionnement M₁ parallèlement au deuxième échangeur de chaleur (W₂) et dans le deuxième mode de fonctionnement M₂ parallèlement au premier échangeur de chaleur (W₁) dans le circuit de réfrigérant (1a, 1b), le quatrième échangeur de chaleur (W₄) étant relié à un deuxième circuit de liquide de refroidissement (6b) qui est de préférence conçu pour refroidir un accumulateur d'énergie électrique (13) et/ou une machine électrique.

4. Dispositif de climatisation (100) selon l'une des revendications précédentes, **caractérisé en ce que** le circuit de réfrigérant (1a, 1b) d'au moins un module de climatisation (10a, 10b) comprend un cinquième échangeur de chaleur (W₅) qui est connecté aussi bien dans le premier mode de fonctionnement M₁ que dans le deuxième mode de fonctionnement M₂ en série avec le premier et le deuxième échangeur de chaleur (W₁, W₂) dans le circuit de réfrigérant (1a, 1b).

5. Dispositif de climatisation (100) selon la revendication 4, **caractérisé en ce que** le cinquième échangeur de chaleur (W₅) est un échangeur de chaleur air/réfrigérant, de préférence sous la forme d'un tube à ailettes, qui est couplé thermiquement à une conduite d'air (8ₐ) destinée à échanger de la chaleur avec l'espace de véhicule intérieur.

6. Dispositif de climatisation (100) selon la revendication 4, **caractérisé en ce que** le cinquième échangeur de chaleur (W₅) est un échangeur de chaleur à liquide de refroidissement/réfrigérant, de préférence sous la forme d'un échangeur à plaques, qui est relié à un troisième circuit de liquide de refroidissement (6c).

7. Dispositif de climatisation (100) selon la revendication 6, **caractérisé en ce que** le troisième circuit de liquide de refroidissement (6c) comprend en outre une troisième pompe (7c), un sixième échangeur de chaleur (W₆) et un septième échangeur de chaleur (W₇) destinés à échanger de la chaleur avec l'espace de véhicule intérieur.

8. Dispositif de climatisation (100) selon l'une des revendications précédentes, **caractérisé en ce que** le circuit de réfrigérant (1a, 1b) d'au moins un module de climatisation (10a, 10b) est couplé thermiquement directement à un accumulateur d'énergie électrique (13), de préférence une batterie de traction, et/ou à une machine électrique.

9. Dispositif de climatisation (100) selon l'une des revendications précédentes, **caractérisé en ce qu'**au moins un des modules de climatisation (10a, 10b) comprend au moins un volet d'air et/ou au moins un ventilateur (9ₐ) et l'organe de commande (20) est conçu pour commander la quantité d'air transportée par le module de climatisation respectif (10a, 10b), de préférence indépendamment des autres modules de climatisation (10a, 10b).

10. Dispositif de climatisation (100) selon l'une des revendications précédentes, **caractérisé en ce que** le circuit de réfrigérant (1a, 1b) d'au moins un module de climatisation (10a, 10b)
a) utilise du CO₂ et/ou du propane comme réfrigérant ; et/ou
b) comprend un collecteur (11) ; et/ou
c) comprend un refroidisseur supplémentaire (12) qui couple thermiquement une zone du circuit de réfrigérant (1a, 1b) située entre le moyen d'étranglement (4ₐ) et le premier échangeur de chaleur (W₁) à une zone du circuit de réfrigérant (1a, 1b) située en amont de l'entrée du compresseur (3).

11. Véhicule automobile (30), de préférence véhicule utilitaire, comprenant un dispositif de climatisation modulaire (100) selon l'une des revendications 1 à 10.

12. Véhicule automobile (30) selon la revendication 12, **caractérisé en ce que** le véhicule automobile (30) est un véhicule électrique, de préférence un bus électrique, et/ou au moins un des modules de climatisation (10a, 10b) est disposé dans la zone du toit du véhicule automobile (30).

13. Véhicule automobile (30) selon l'une des revendications 11 et 12, **caractérisé en ce que**, pour effectuer une climatisation zonale de l'espace de véhicule intérieur, chacun des modules de climatisation (10a, 10b) est associé à une zone (16a, 16b) de l'espace de véhicule intérieur.

14. Véhicule automobile (30) selon la revendication 13, **caractérisé en ce que** l'organe de commande central (20) est conçu pour, conformément à un ordre,
a) activer une partie des modules de climatisation (10a, 10b) et/ou désactiver une partie des modules de climatisation (10a, 10b) ; et/ou
b) faire fonctionner une partie des modules de climatisation (10a, 10b) dans le premier mode de fonctionnement M₁ et/ou une partie des modules de climatisation (10a, 10b) dans le deuxième mode de fonctionnement M₂.
